# EUROPEAN PATENT SPECIFICATION

(11) **EP 1 352 932 B1**
(45) Date of publication and mention of the grant of the patent: **26.09.2007**
(21) Application number: 03007988.3
(22) Date of filing: 10.04.2003
(51) Int. Cl.: C09D 11/00

(54) **ink jet recording method**
Tintenstrahlaufzeichnungsverfahren
procédé d'enregistrement par jet d'encre

(30) Priority: 10.04.2002 JP 2002108028; 10.07.2002 JP 2002201538
(43) Date of publication of application: 15.10.2003
(73) Proprietor: FUJIFILM Corporation, Minato-ku Tokyo (JP)
(72) Inventor: Horie, Seiji, Yoshida-cho, Haibara-gun, Shizuoka (JP); Sakai, Yutaka, Yoshida-cho, Haibara-gun, Shizuoka (JP)
(74) Representative: HOFFMANN EITLE

(56) References cited:
- EP-A- 0 826 751
- US-A- 5 254 425
- US-A- 5 708 095
- US-A- 6 080 449
- US-A- 6 143 806

## Description

### FIELD OF THE INVENTION

The present invention relates to oil-based ink to be used for an ink-j et recording device for forming letters or images on a medium on which they are transferred, including a recording paper, by splashing ink and to an image forming method using the oil-based ink, especially to oil-based ink containing a pigment dispersing agent in the nonaqueous dispersion medium and to an image forming method using the oil-based ink.

### BACKGROUND OF THE INVENTION

Conventional ink-jet recording methods can be divided broadly into two methods; one is a continuance type in which ink particles are continuously generated, the amount of electrostatic charges on the ink particles to be used for forming images is controlled, and then the flight orbits of the particles are controlled by passing them through the electrostatic field formed between deflecting electrodes, and the other is an on-demand type in which ink is sprayed only when it is needed for printing.

Ink occupying the mainstream of ink to be used in such ink-jet recording is one that a wide variety of water-soluble dyes are dissolved in water or in a solvent that is comprised of water and a water-soluble organic solvent and various additives are added as needed (hereinafter referred to as water dye ink). However, when printing is actually performed with the use of water dye ink, there were some defects; high quality printing can not be obtained because ink blots on recording paper according to the paper kind, recorded images that have been formed are inferior in water resistance and light resistance, ink drying on recording paper is slow to leave traces, the degradation of recorded images due to color mixture (color turbidity or color irregularity induced in the boundary surface of colors in cases where dots in different colors are printed adjacently), and the like.

Accordingly, in order to improve the water resistance and light resistance of recorded images which are problems in said water dye ink, various trials have been carried out in which pigment-series ink, which is constituted by dispersing the pigment in particulates in an aqueous dispersion medium or a nonaqueous dispersion medium, is applied to a ink-jet recording method. For example, ink for an ink-jet printer in which the pigment is dispersed in a dispersion medium having water as a main component have been proposed in Japanese Patent Application Laid-Open Nos. 2-255875, 3-76767, 3-76768, 56-147871, and 56-147868. However, because the pigment is insoluble in the medium, the ink had problems that it was poor in dispersion stability, easy to cause clogging at nozzle parts and the like.

On the other hand, ink in which pigment is dispersed in a nonpolar insulating solvent (hereinafter referred to as oil pigment ink) has such advantages that there is a small number of stains because of its good absorptivity in paper, recorded images are good in water resistance and the like, and such ink as disclosed in, for example, Japanese Patent Application Laid-Open Nos. 57-10660 and 57-10661 has been proposed. Though pigments are micronized with the use of an alcoholamide based dispersing agent in Japanese Patent Application Laid-Open No. 57-10660 and with the use of a sorbitan based dispersing agent in Japanese Patent Application Laid-Open No. 57-10661, the ink still had problems that it was easy to cause clogging at nozzle parts and the like because pigment particles were not uniformly dispersed sufficiently in a nonpolar insulating solvent and they were inferior in dispersion stability. Moreover, the ink had a big defect of being lacking in abrasion resistance because the pigment itself had not sticking capacity to recording paper.

In order to improve these defects, resin dissolved type oil-based ink has been proposed, which uses a resin that is soluble in nonpolar insulating solvents both as a sticking agent and a pigment dispersing agent. For example, though a terpene phenol based resin has been proposed as a resin mentioned above in Japanese Patent Application Laid-Open No. 3-234772, the dispersion
stability of the pigment was not sufficient, leading to a problem in the reliability of the ink. Furthermore, because the resin was dissolved in a nonpolar solvent, the resin did not remain in the amount needed to fix the pigment completely to recording paper, resulting in the insufficient water resistance and abrasion resistance of the ink.

Accordingly, in order to obtain high abrasion resistance, it has proposed to cover pigment particles with a resin that is soluble or semisoluble in nonpolar insulating solvents. For example, though oil-based ink in which the pigment was covered with resin by a microencapsulation method and the like in Japanese Patent Application Laid-Open No. 4-25574, because it was difficult to disperse resin particles encapsulating pigments uniformly in the state of particulates and their dispersion stability was also not sufficient, leading to a problem in the reliability of the ink. Moreover, in recent years, highly advancing the image quality of a photograph has been achieved by a general ink-jet printer using water dye ink, and it has been required to pulverize pigment as fine as possible in order to increase the
coloring property and transparency in even pigment ink and to maintain its dispersion state stably.

However, in the meantime, the finer the pigment is pulverized, the easier the crushing of primary particles of the pigment is occurred at the same time as the pulverization of the pigment. Further, because the cohesive energy of the particles becomes large simultaneously due to increase in the surface energy, the reaggregation of the particles becomes easy to occur, finally resulting in inducing an evil of damaging the storage stability of pulverized pigment dispersion. Like this, though the demand for pigment dispersion used in oil pigment ink for an ink-jet printer requires higher pulverization, dispersing the pigment in particulates needs higher techniques and it is very difficult to increase the dispersion stability. As a result, the
appearance of oil pigment ink to meet the above-mentioned requirements is desired.

Besides, a binder resin to disperse and cover a dispersing agent is generally desired to have the following properties: (1) to form colored admixture by sufficiently covering the surface of pigment and to have its appropriate fluidity with heat and like; (2) to disperse the coloring agent thoroughly in the dispersing medium by covering the agent; (3) to be as transparent as possible; (4) to stick to recording paper through
fixation and to give sufficient abrasion resistance to the paper, and the like.

These properties that are desired for a binder resin, that is, it is an ideal to have not only a function of adsorbing a coloring agent and sufficiently dispersing it into a dispersing medium and further a function of sticking to recording paper to give sufficient abrasion resistance to it, but also to have such components that one solvates and other one is hard to solvate with a dispersing medium and further one component that has a polar group, as the fundamental constitution of the binder resin. It was, however, difficult to find such a binder resin as to meet all of these properties.

### SUMMARY OF THE INVENTION

Accordingly, a first object of the present invention is to provide oil-based ink for an ink-jet printer having such high ejecting stability that pigment is uniformly dispersed in a particulate state and the pigment dispersion liquid is excellent in dispersion stability to prevent clogging at nozzle parts.

A second object of the present invention is to provide oil-based ink for an ink-jet printer, which is excellent in drying property on recording paper, water resistance and light resistance of recorded images, and has high abrasion resistance.

A third obj ect of the present invention is to provide oil-based ink for an ink-jet printer capable of printing a large number of printed matters with colored images of being excellent in optical property and being clear.

The present inventors have eagerly studied and found that the above-mentioned problems of the present invention would be solved by the following constitution.
(1) An ink-jet recording method comprising ejecting an oil-base ink-jet ink composition from an ink-jet recording device onto a medium to form letters and/or images on the medium, the oil-based ink-jet ink composition comprising:
   a nonaqueous dispersion medium;
   a coloring agent; and
   a binder resin comprising a graft copolymer,
   wherein the graft copolymer comprises a monomer constituting a principal chain part insoluble in the nonaqueous dispersion medium and a macromonomer constituting a graft part soluble in the nonaqueous dispersion medium, and
   wherein the coloring agent and the binder resin are dispersed in particulate form due to wet dispersion.
(2) The image forming method according to the above (1), wherein the monomer is a monomer represented by the following formula (III), and the macromonomer is a macromonomer having a weight-average molecular weight of from 1 × 10³ to 4 × 10⁴, having a chain of a polymer comprising a repeating unit represented by the following formula (II), and having a polymerizable double bond group represented by the following formula (I) at one end of the chain, with the proviso that the polymer is soluble in nonaqueous dispersion medium: 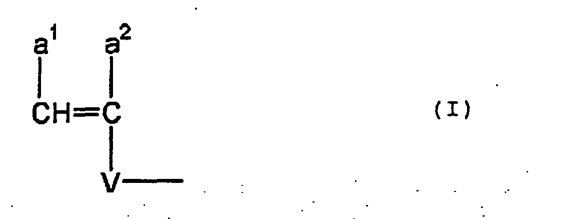 wherein V represents -COO-, -OCO-, -(CH₂)ₙ-OCO-, -(CH₂)ₙ-COO-, -O-, -CONHCOO-, -CONHCO-, -SO₂-, -CO-, -CON(Z¹)-, -SO₂N(Z¹)-, or a phenylene group which may be 1,2-, 1,3-, and 1,4-phenylene group, Z¹ represents a hydrogen atom or a hydrocarbon group, and n represents an integer of from 1 to 3; and a¹ and a², which may be the same or different each other, each independently represents a hydrogen atom, a halogen atom, a cyano group, a hydrocarbon group, -COO-Z²-, or -COO-Z² having a hydrocarbon group incorporated therein, and Z² represents a hydrogen atom or a hydrocarbon group; 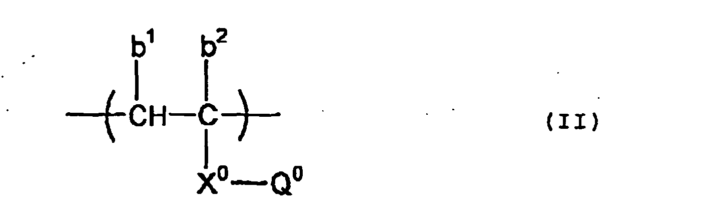 wherein X⁰ represents at least one connecting group selected from -COO-, -OCO-, -(CH₂)ₘ-OCO-, -(CH₂)ₘ-COO-, -O-, -CONHCOO-, -CONHCO-, -SO₂-, -CO-, -CON(Z³)-, and -SO₂N(Z³)-, wherein Z³ represents a hydrogen atom or a hydrocarbon group, and m represents an integer of from 1 to 3; b¹ and b², which may be the same or different each other, each independently represents a hydrogen atom, a halogen atom, a cyano group, a hydrocarbon group, -COO-Z²-, or -COO-Z² having a hydrocarbon group incorporated therein, and Z² represents a hydrogen atom or a hydrocarbon group; Q⁰ represents an aliphatic group having 4 to 22 carbon atoms; 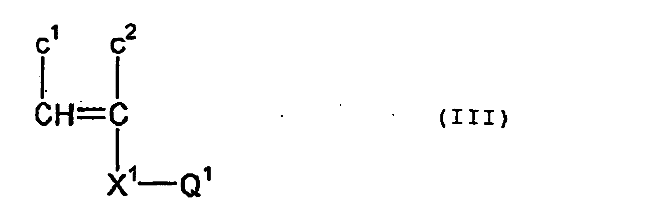 wherein, X¹ represents -COO-, -OCO-, -(CH₂)ₙ-OCO-, -(CH₂)ₙ-COO-, -O-, -CONHCOO-, -CONHCO-, -SO₂-, -CO-, -CON (Z¹)-, -SO₂N(Z¹)-, or a phenylene group which may be 1,2-, 1,3-, and 1,4-phenylene group, Z¹ represents a hydrogen atom or a hydrocarbon group, and n represents an integer of from 1 to 3; Q¹ represents a hydrogen atom, an aliphatic group having 1 to 22 carbon atoms, or an aromatic group having 6 to 12 carbon atoms; and c¹ and c², which may be the same or different each other, each independently represents a hydrogen atom, a halogen atom, a cyano group, a hydrocarbon group, -COO-Z²-, or -COO-Z² having a hydrocarbon group incorporated therein, and Z² represents a hydrogen atom or a hydrocarbon group.
(3) The ink-jet recording method according to the above (1), wherein the oil-based ink composition further comprises a pigment dispersing agent.

The oil-based ink composition of the present invention for an ink-jet printer contains a binder resin and a coloring agent as main components, and the coloring agent and the binder resin are dispersed in particulate form due to wet dispersion.

Graft copolymers themselves of the present invention are described in Japanese Patent Application Laid-Open Nos. 4-350669, 5-188657, and 3-188469. However, in Japanese Patent Application Laid-Open Nos. 4-350669 and 5-188657, a graft copolymer is used as a dispersing agent for dispersion polymerization of a liquid developer of resin particle series, while in Japanese Patent Application Laid-Open No. 3-188469, a graft copolymer is used as a dispersing agent for a nonaqueous pigment, but these applications do not disclose or suggest such facts expressed in the present invention that a graft copolymer is excellent in using as a binder resin to give dispersibility, fixation property, and abrasion resistance to a coloring agent.

### DETAILED DESCRIPTION OF THE INVENTION

In the following, the present invention will be expressed in detail.

First, a graft copolymer of the present invention, which is used as a binder resin, will be explained.

The graft copolymer of the present invention contains at least one kind of monomer (hereinafter it may be referred to as monomer (S)) constituting the principal chain part insoluble in the nonaqueous dispersion medium and at least one kind of macromonomer (hereinafter it may be referred to as macromonomer (M)) constituting the graft parts (side chain parts) soluble in the nonaqueous dispersion medium.

Monomer (S) is a monomer in which a polymer containing the monomer (S) becomes to be insoluble in a nonaqueous dispersion medium, and constitutes a principal chain part insoluble in the nonaqueous dispersion medium in the graft copolymer prepared by being copolymerized with macromonomer (M). To be concrete, monomers represented by the above general formula (III) can be listed as monomer (S).

Macromonomer (M) is a macromonomer having a side chain part soluble in a nonaqueous dispersion medium, and constitutes a graft part soluble in the nonaqueous dispersion medium in the graft copolymer prepared by being copolymerized with monomer (S). To be concrete, it is preferable to be a macromonomer having weight-average molecular weight of 1 × 10³ to 4 × 10⁴ that contains a polymerizable double bond group represented by the general formula (I), which can copolymerize with the above-mentioned monomer (S), at one end of the principal chain of a polymer containing at least one kind of constitutional repeating unit represented by the above-mentioned general formula (II). Here, the polymer containing at least one kind of constitutional repeating unit represented by the general formula (II) is soluble in nonaqueous dispersion medium.

Hydrocarbon groups, which are contained in a¹, a², V, b¹, b², X⁰, and Q⁰ in the above-mentioned general formula (I) or (II), have an indicated carbon number (as a hydrocarbon group not substituted), but these hydrocarbon groups may be substituted.

As for preferable hydrocarbon groups that are Z¹ except hydrogen atom in the substituents indicated by V in the general formula (I), the following groups can be listed; an alkyl group having 1 to 22 carbon atoms that may be substituted (for example, a methyl group, an ethyl group, a propyl group, a butyl group, a heptyl group, a hexyl group, an octyl group, a decyl group, a dodecyl group, a tridecyl group, a tetradecyl group, a hexadecyl group, an octadecyl group, a 2-chloroethyl group, a 2-bromoethyl group, a 2-cyanoethyl group, a 2-methoxycarbonylethyl group, a 2-methoxyethyl group, a 2-bromopropyl group and the like), an alkenyl group having 4 to 18 carbon atoms that may be substituted (for example, a 2-methyl-1-propenyl group, a 2-butenyl group, a 2-pentenyl group, a 3-methyl-2-pentenyl group, a 1-pentenyl group, a 1-hexenyl group, a 2-hexenyl group, a 4-methyl-2-hexenyl group and the like), an aralkyl group having 7 to 12 carbon atoms that may be substituted (for example, a benzyl group, a phenethyl group, a 3-phenylpropyl group, a naphthylmethyl group, a 2-naphthylethyl group, a chlorobenzyl group, a bromobenzyl group, a methylbenzyl group, an ethylbenzyl group, a methoxybenzyl group, a dimethylbenzyl group, a dimethoxybenzyl group and the like), an alicyclic group having 5 to 8 carbon atoms that may be substituted (for example, a cyclohexyl group, a 2-cyclohexylethyl group, a 2-cyclopentylethyl group and the like), an aromatic group having 6 to 12 carbon atoms that may be substituted (for example, a phenyl group, a naphthyl group, a tolyl group, a xylyl group, a propylphenyl group, a butylphenyl group, an octylphenyl group, a dodecylphenyl group, a methoxyphenyl group, an ethoxyphenyl group, a butoxyphenyl group, a decyloxyphenyl group, a chlorophenyl group, a dichlorophenyl group, a bromophenyl group, a cyanophenyl group, an acethylphenyl group, a methoxycarbonylphenyl group, an ethoxycarbonylphenyl group, a butoxycarbonylphenyl group, an acetamidephenyl group, a propioamidephenyl group, a dodecyloylamidephenyl group and the like), a group having 5 to 18 carbon atoms that is composed of crosslinked hydrocarbons (for example, a group of bicyclo[1,1,0]butane, bicyclo[3,2,1]octane, bicyclo[5,2,0]nonane, bicyclo[4,3,2]undecane, adamantane and the like), and the like.

When V represents -C₆H₄-, the benzene ring may have substituents. As substituents, a halogen atom (for example, a chlorine atom, a bromine atom and the like), an alkyl group (for example, a methyl group, an ethyl group, a propyl group, a butyl group, a chloromethyl group, a methoxymethyl group and the like) and the like can be listed.

a¹ and a² may be the same or different each other, and preferably represents a hydrogen atom, a halogen atom (for example, a chlorine atom, a bromine atom and the like), a cyano group, an alkyl group having 1 to 3 carbon atoms (for example, a methyl group, an ethyl group, a propyl group and the like), -COO-Z², or -CH₂COOZ² (Z² preferably represents a hydrogen atom, an alkyl group having 1 to 18 carbon atoms, an alkenyl group, an aralkyl group or an alicyclic group, or an aryl group, and these hydrocarbon groups may be substituted, to be concrete, represent the same contents as explained about the above-mentioned Z¹).

In the general formula (II), X⁰ represents one or more kinds of connecting group selected from -COO-, -OCO-, -(CH₂)ₘ-OCO-, -(CH₂)ₘ-COO-, -O-, -CONHCOO-, -CONHCO-, -SO₂-, -CO-, -CON(Z³)-, and -SO₂N(Z³)-. Here, Z³ represents a hydrogen atom or a hydrocarbon group, to be concrete, represents the same contents as the above-mentioned Z¹, and m represents an integer from 1 to 3.

Q⁰ represents an aliphatic group having 4 to 22 carbon atoms, and more concretely, a group having the same content as the alkyl group explained in the above-mentioned Z¹ can be listed.

b¹ and b² may be the same or different each other, and are synonymous with a¹ and a² in the above-mentioned general formula (I). The preferred ranges of b¹ and b² are the same contents as those explained about a¹ and a².

A hydrogen atom and a methyl group can be listed as more preferred groups of a¹ and a² in the general formula (I) or b¹ and b² in the general formula (II).

Polymers containing repeating units represented by the general formula (II) are soluble in nonaqueous dispersion medium. As examples of the polymers, polylauryl methacrylate, polystearyl methacrylate, poly-2-ethylhexyl methacrylate, cetyl methacrylate and the like can be listed.

Moreover, concrete examples of repeating units represented by the general formula (II) are listed in the following, but the scope of the present invention should not be limited thereto.

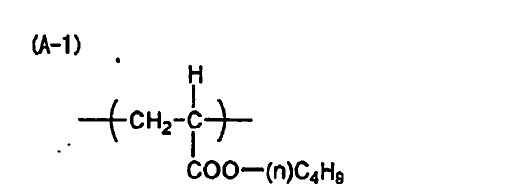

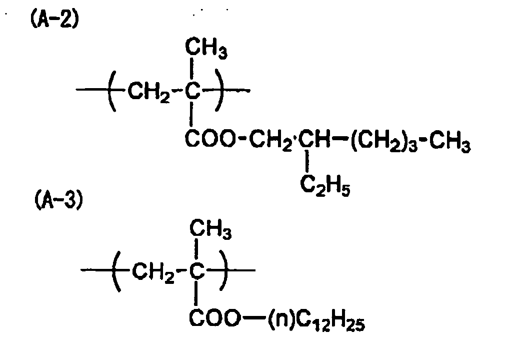

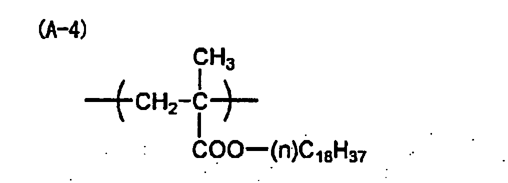

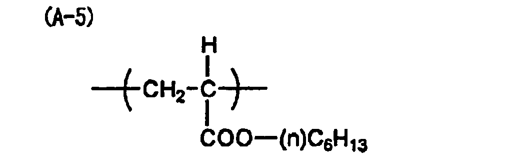

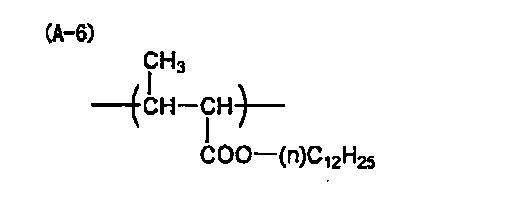

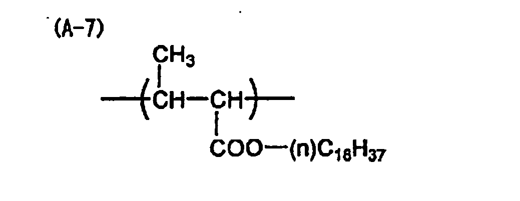

Among macromonomers (M) of the present invention, those represented by the following general formula (IV) are preferable.

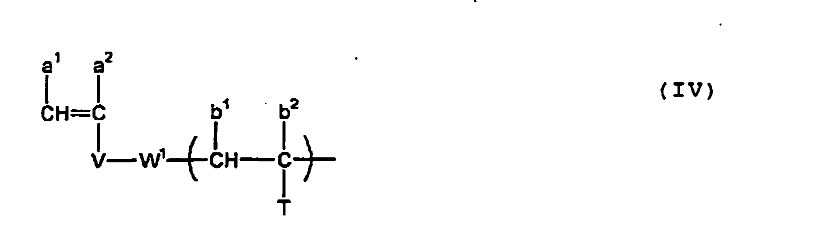

In the general formula (IV), a¹, a², b¹, b², and V represent the same contents as those explained in the general formula (I) and (II), respectively.

T represents -X⁰-Q⁰ represented by the general formula (II), and represents the same contents as explained in the general formula (II).

W¹ represents a single bond, or a single connecting group selected from the atomic group of -C(Z⁶)(Z⁷)- [Z⁶ and Z⁷ represent a hydrogen atom, a halogen atom (for example, a fluorine atom, a chlorine atom, a bromine atom and the like), a cyano group, or a hydroxyl group each], -(CH=CH)-, a cyclohexylene group (hereinafter the cyclohexylene group is represented by Cy, but Cy includes 1,2-, 1,3-, and 1,4-cyclohexylene groups), -Ph-, -O-, -S-, -C(=O)-, -N(Z⁸)-, -COO-, -SO₂-, -CON(Z⁸)-, -SO₂N(Z⁸)-, -NHCOO-, -NHCONH-, or -Si(Z⁸)(Z⁹)- [Z⁸ and Z⁹ represent a hydrogen atom, a hydrocarbon group and the like that have the same contents as the above-mentioned Z¹] and the like, or a connecting group that is constituted by the optional combination of groups selected from the above-mentioned atomic group.

Especially preferable examples of X⁰, V, a¹, a², b¹ and b² in the above-mentioned general formula (I), (II), or (IV) will be shown in the following, respectively.

One or more kinds of connecting groups selected from -COO-, -OCO-, -O-, -CH₂COO-, and -CH₂OCO-canbelisted as X⁰, one kind of connecting group selected from all of the above-mentioned same contents as those explained in the general formula (I) (provided that Z¹ is hydrogen atom) as V, and a hydrogen atom or a methyl group as a¹, a², b¹, and b².

In the following, concrete examples of groups represented by CH(a¹)=C(a²)-V-W¹- in the general formula (IV) will be shown. However, the contents of the present invention should not be limited thereto. Moreover, in the following each example, j represents an integer from 1 to 12, k represents an integer from 2 to 12, and a represents H or -CH₃.

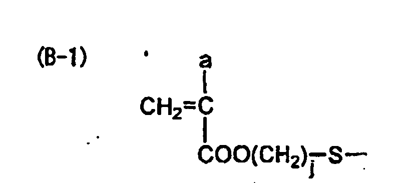

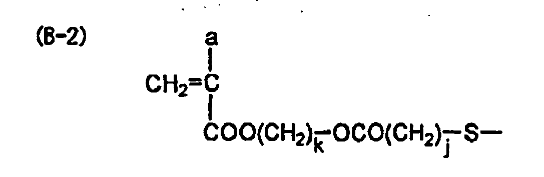

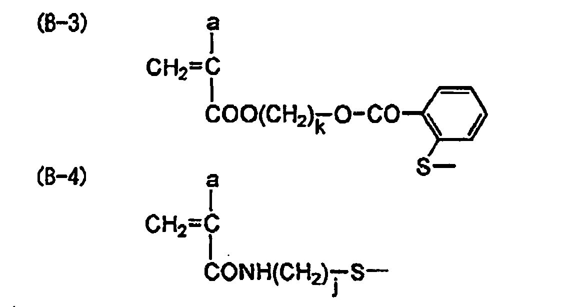

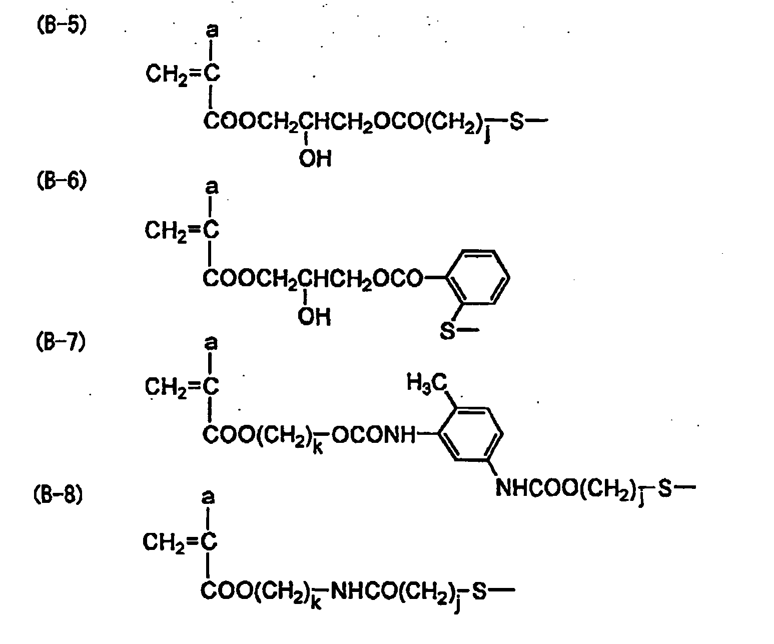

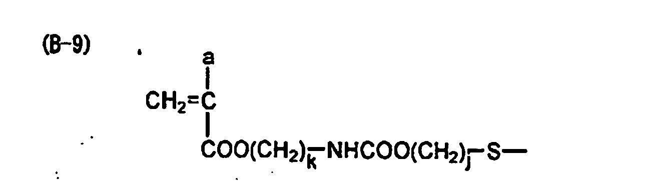

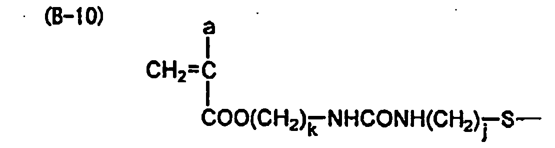

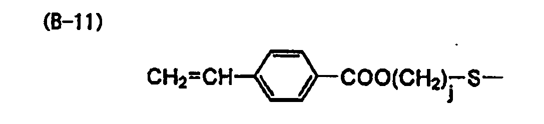

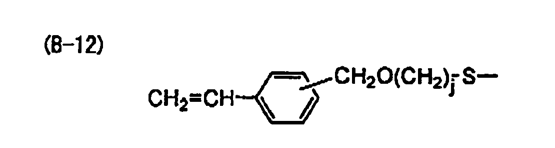

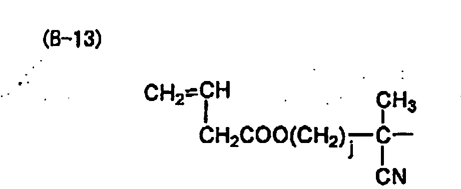

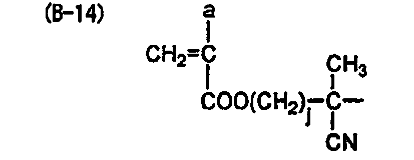

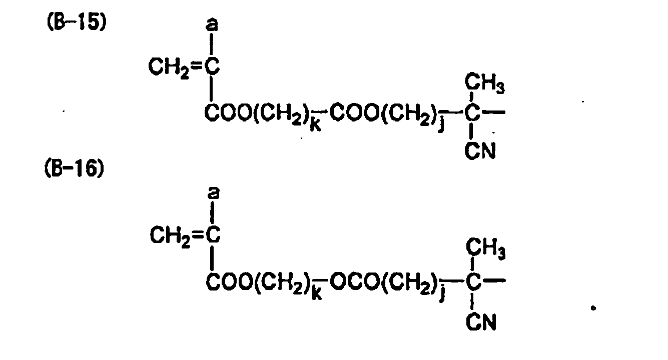

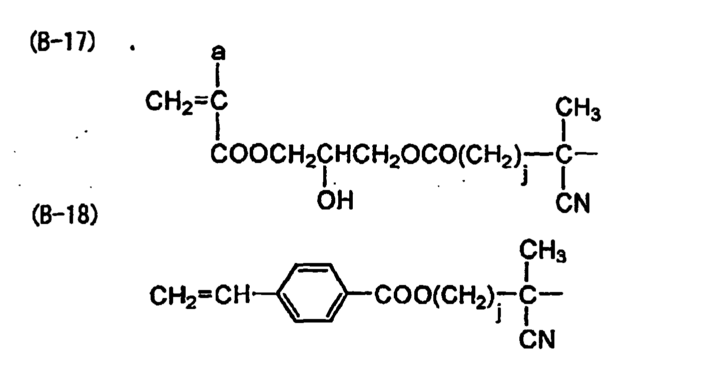

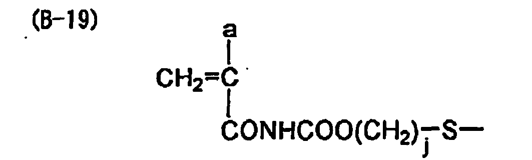

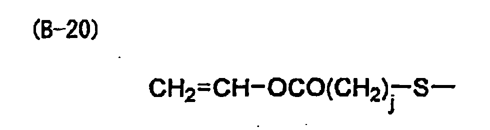

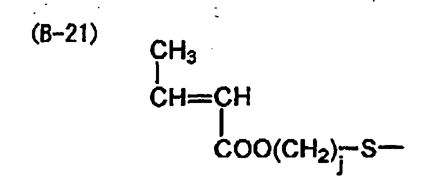

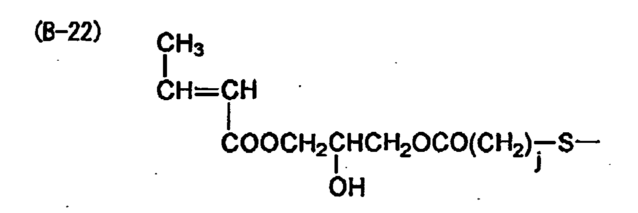

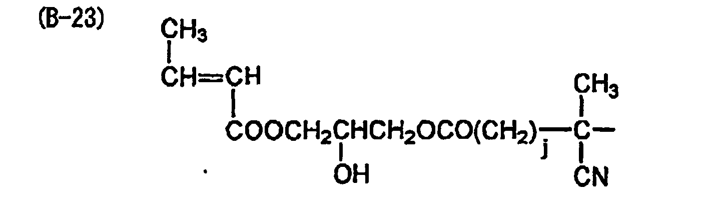

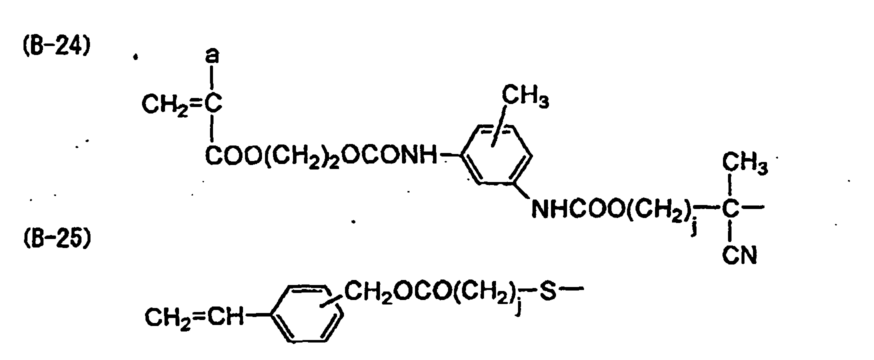

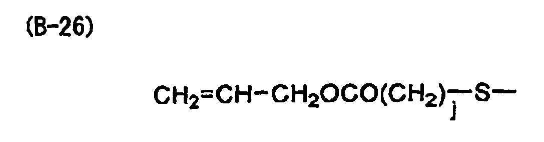

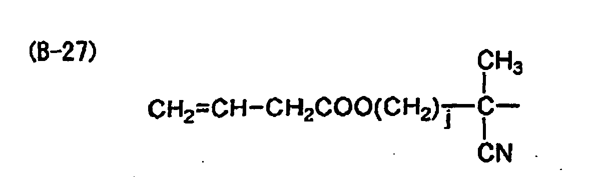

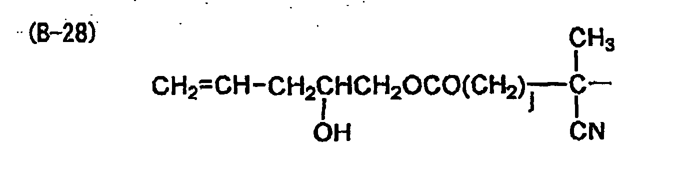

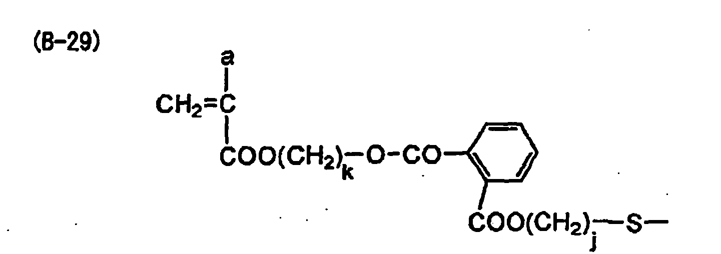

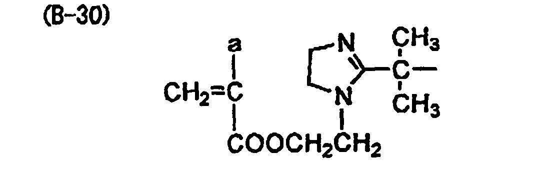

Macromonomers (M) of the present invention can be prepared by conventionally well-known synthetic methods. Several methods can be listed, for example, (1) a method based on an ionic polymerization method in which various reagents are reacted on the end of a living polymer obtained by anionic polymerization or cationic polymerization to prepare macromonomers, (2) a method based on a radical polymerization method in which macromonomers are prepared by reacting various reagents and an oligomer having a reactive group bonded to its end, the oligomer being obtained by radical polymerization using a polymerization initiator and/or a chain-transfer agent that contains a reactive group, including carboxyl group, hydroxy group and amino group, in the molecule, (3) a method based on a polyaddition condensation method in which a polymerizable double bond group is introduced similarly to the above-mentioned radical polymerization method into an oligomer obtained by polyaddition reaction or polycondensation reaction, and the like.

To be concrete, the macromonomers can be synthesized according to methods reported in general remarks written by P. Dreyfuss & R. P. Quirk in Encycl. Polym. Sci. Eng., vol. 7, pp. 551 (1987), by P. F. Rempp & E. Franta in Adv. Polym. Sci., vol. 58, pp. 1 (1984), by V. Percec in Appl. Polym. Sci., vol. 285, pp. 95 (1984), by R. Asami & M. Takagi in Makromol. Chem. Suppl., vol. 12, pp. 163 (1985), by P. Rempp et al in Makromol. Chem. Suppl., vol. 8, pp. 3 (1987), by Yuushi Kawakami in Chemical Industries, vol. 38, pp. 56 (1987), by Tatsuya Yamashita in Polymers, vol. 31, pp. 988 (1982), by Shirou Kobayashi in Polymers, vol. 30, pp. 625 (1981), by Toshinobu Higashimura in Journal of Japan Adhesion Association, vol. 18, pp. 536 (1982), by Kouichi Ito in Polymer Processing, vol. 35, pp. 262 (1986), by Shirou Touki & Takashi Tsuda in Functional Materials, 1987, Nos. 10 and 5, and to methods reported in cited literatures and patents in those general remarks.

On the other hand, in the above-mentioned graft copolymers, monomers that constitute principal chain parts insoluble in nonaqueous dispersion medium are preferable to be monomers represented by the above-mentioned general formula (III). Monomers represented by the general formula (III) are monomers that can be copolymer components in graft copolymers together with the above-mentioned macromonomers.

In the general formula (III), X¹ represents the same contents as V in the general formula (II) and is preferable to be -COO-, -OCO-, -CH₂OCO-, -CH₂COO-, -O-, or -Ph-. Q¹ is preferable to represent a hydrogen atom, an aliphatic group having 1 to 22 carbon atoms, or an aromatic group having 6 to 12 carbon atoms. To be concrete, groups of the same contents as aliphatic groups, or aromatic groups of Z¹ in the above-mentioned general formula (I) can be listed.

Then, c¹ and c² may be the same or different each other, and to be concrete, those of the same contents as a¹ and a² in the general formula (I) can be listed. It is especially preferable that either c¹ or c² represents hydrogen atom.

As concrete examples of monomers represented by the general formula (III), methyl methacrylate, ethyl methacrylate, isopropyl methacrylate, styrene, vinyltoluene and the like can be listed.

In a graft copolymer of the present invention, another monomer may be contained as an additional copolymer component together with a monomer represented by the general formula (III), provided that both monomers can be copolymerized each other. For example, following compounds can be listed, that is, acrylonitrile, methacrylonitrile, acrylamide, methacrylamide, hydroxyethyl methacrylate, dialkylaminoethyl methacrylates (for example, dimethylaminoethyl methacrylate), styrene, chlorostylene, bromostyrene, vinylnaphthalene, heterocyclic compounds containing a polymerizable double bond group (for example, vinylpyridine, vinylimidazoline, vinylthiophene, vinyldioxane, vinylpyrrolidone and the like), unsaturated carboxylic acids (for example, acrylic acid, methacrylic acid, itaconic acid, crotonic acid, maleic acid and the like), itaconic anhydride, maleic anhydride and the like.

Any other monomer than these monomers represented by the general formula (III) may be used as long as it is a monomer that can be copolymerized. However, the existence rate of these other monomers is preferable to be not more than 30 percent by weight in the total polymer components in the graft copolymer of the present invention.

Moreover, in a graft copolymer of the present invention, at least one kind of polar group selected from a -PO₃H₂ group, a -SO₂H group, a -COOH group, a -OH group, a -SH group, a -(Z⁰)P(O)OH group (here, Z⁰ represents a -Z¹⁰ group or a -OZ¹⁰ group, and Z¹⁰ represents a hydrocarbon group), a formyl group, and an amino group may be bonded to the one end of the principal chain of the graft polymer.

In the above-mentianed - (Z°) P(O)OH group, Z⁰ represents a -Z¹⁰ group or a -OZ¹⁰ group, and Z¹⁰ preferably represents a hydrocarbon group having 1 to 18 carbon atoms. As for hydrocarbon groups of Z¹⁰, it is more preferable to list an aliphatic group having 1 to 8 carbon atoms that may be substituted (for example, a methyl group, an ethyl group, a propyl group, a butyl group, a pentyl group, a hexyl group, a butenyl group, a pentenyl group, a hexenyl group, a 2-chloroethyl group, a 2-cyanoethyl group, a cyclopentyl group, a cyclohexyl group, a benzyl group, a phenethyl group, a chlorobenzyl group, a bromobenzyl group or the like), or an aromatic group that may be substituted (for example, a phenyl group, a tolyl group, a xylyl group, a mesityl group, a chlorophenyl group, a bromophenyl group, a methoxyphenyl group, a cyanophenyl group or the like).

Moreover, amino groups in polar groups of the present invention represent -NH₂, -NH (Z¹¹), or -N (Z¹¹) (Z¹²), and Z¹¹ and Z¹² are preferable to independently represent a hydrocarbon group having 1 to 18 carbon atoms, respectively. It is more preferable that Z¹¹ and Z¹² represent hydrocarbon groups having 1 to 8 carbon atoms. As their concrete examples, groups of the same contents as the above-mentioned hydrocarbon groups of Z¹ can be listed.

It is further more preferable that hydrocarbon groups of Z¹⁰, Z¹¹, and Z¹² are an alkyl group having 1 to 4 carbon atoms, a benzyl group, or a phenyl group, all of which may be substituted.

Any of the above-mentioned polar groups will bond to the one end of the principal chain of a polymer directly or through an optional connecting group. A bond linking a graft copolymer component and a polar group is one that is constituted by an optional combination of atomic groups comprised of a carbon-carbon bond (single bond or double bond), a carbon-heteroatom bond (examples of heteroatoms include an oxygen atom, a sulfur atom, a nitrogen atom, a silicon atom or the like), and a heteroatom-heteroatom bond.

Among graft copolymers of the present invention in which a specific polar group is bonded to the one end of the principal chain of a polymer, those represented by general formula (Va) or (Vb) are preferable.

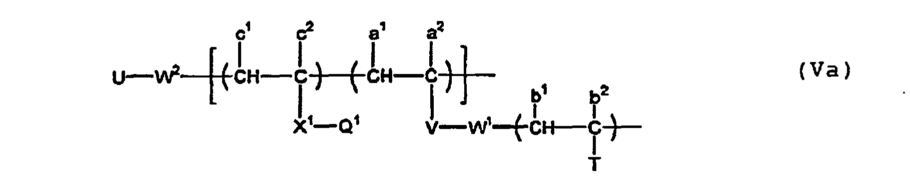

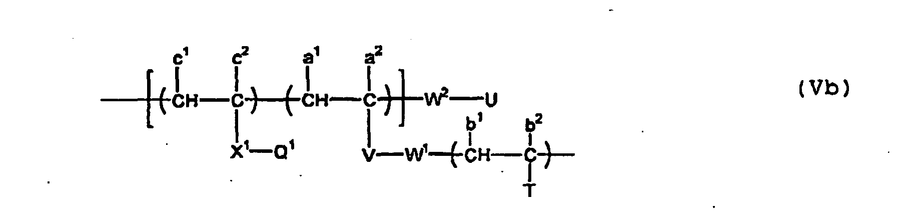

In the general formulas (Va) and (Vb), a¹, a², b¹, b², c¹, c², X¹, Q¹, V, W¹ and T represent the same contents as each symbol in the general formulas (I) to (III), respectively.

U represents the above-mentioned polar group to be bonded to the one end of a graft copolymer.

W² represents a single bond or a group to link the above-mentioned polar group and the principal chain part of a polymer, and to be concrete, representes the same contents as those explained about W¹.

As mentioned above, in case of a graft copolymer composed of bonding a specific polar group to the end of the principal chain of a polymer, the principal chain is preferable not to contain any copolymer component containing a polar group of a phosphono group, a carboxyl group, a sulfo group, a hydroxyl group, a formyl croup, an amino group, a mercapto group, or a -Z⁰P(O)OH group.

A graft copolymer in which a specific polar group is bonded only to the one end of the principal chain of such a polymer can be easily prepared by synthetic methods, including (1) a method in which various reagents are reacted on the end of a living polymer obtained by conventionally well-known anionic polymerization or cationic polymerization (a method based on an ionic polymerization method), (2) a method of preparing the copolymer by radical polymerization using a polymerization initiator and/or a chain-transfer agent that contains a specific polar group in the molecule (a method based on a radical polymerization method), or (3) a method in which a polymer containing a reactive group at the end, which is obtained by an ionic polymerization method or a radical polymerization method as mentioned above, is converted to a polymer containing a specific polar group represented in the present invention through polymer reaction.

To be concrete, such graft copolymers can be prepared according to methods reported in general remarks written by P. Dreyfuss & R. P. Quirk in Encycl. Polym. Sci. Eng., vol. 7, pp. 551 (1987), by Yoshiki Nakajyo & Yuuya Yamashita in "Dye and Drug," vol. 30, pp. 232 (1985), by Akira Ueda & Susumu Nagai in "Chemistry and Industry," vol. 60, pp. 57 (1986), and to methods reported in cited literatures in those general remarks.

As the above-mentioned polymerization initiators containing a specific polar group in the molecule, azobis compounds can be listed, for example,
4,4'-azobis(4-cyanovaleric acid),
4,4'-azobis(4-cyanovaleric chloride),
2,2'-azobis(2-cyanopropanol),
2,2'-azobis(2-cyanopentanol),
2,2'-azobis[2-methyl-N-(2-hydroxyethyl)-propioamide],
2,2'-azobis[2-methyl-N-[1,1-bis(hydroxymethyl)ethylp ropioamide],
2,2'-azobis{2-methyl-N-[1,1-bis(hydroxymethyl)-2-hydroxyethyl]propioamide},
2,2'-azobis[2-(5-methyl-2-imidazole-2-yl)propane],
2,2'-azobis[2-(4,5,6,7-tetrahydro-1H-1,3-diazepine-2 -yl)propane],
2,2'-azobis[2-(3,4,5,6-tetrahydropyrimidine-2-yl)pro pane],
2,2'-azobis[2-(5-hydroxy-3,4,5,6-tetrapyrimidine-2-y 1)propane],
2,2'-azobis{2-[1-(2-hydroxyethyl)-2-imidazoline-2-yl ]propane),
2,2'-azobis[N-(2-hydroxyethyl)-2-methyl-propioneamid ine],
2,2'-azobis[N-(4-aminophenyl)-2-methylpropioneamidin e] or the like.

Further, as chain-transfer agents containing a specific polar group in the molecule, for example, mercapto compounds containing said polar group or a substituent being able to be induced to said polar group (for example, thioglycolic acid, thiomalic acid, thiosalicylic acid, 2-mercaptopropionic acid, 3-mercaptopropionic acid, 3-mercaptobutyric acid, N-(2-mercaptopropionyl)glycin, 2-mercaptonicotinic acid, 3-[N-(2-mercaptoethyl)carbamoyl]propionic acid, 3-[N-(2-mercaptoethyl)amino]propionic acid, N-(3-mercaptopropionyl)alanine, 2-mercaptoethanesulfonicacid, 3-mercaptosulfonic acid, 2-mercaptobutanesulfonic acid, 2-mercaproethanol, 3-mercapto-1,2-propanediol, 1-mercapto-2-propnanol, 3-mercapto-2-butanol, mercaptophenol, 2-mercaptoethylamine, 2-mercaptoimidazole, 2-mercapto-3-pyridinol and the like), or iodoalkyl compounds containing the above-mentioned polar group or substituent (for example, iodoacetic acide, iodopropionicacid, 2-iodoethanol, 2-iodoethanesulfonic acid, 3-iodopropanesulfonic acid and the like) can be listed. Mercapto compounds can preferably be listed.

These chain-transfer agents or polymerization initiators are used in an amount of preferably 0.1 to 10 parts by weight and more preferably 0.5 to 5 parts by weight each based on 100 weight parts of total monomers.

Though among graft copolymers of the present invention in which a polar group is bonded to the one end of the principal chain of the polymer, preferable ones are represented by said general formula (Va) or (Vb), as concrete examples of the parts represented by -W²-U in these formula, parts set forth in Japanese Patent Application Laid-Open No. 3-188463 can be listed.

As for the molecular weight of the graft copolymer, number-average molecular weight ranging from 3,000 to 500,000 and preferably from 10, 000 to 200, 000 as measured values by GPC method are suitable for the graft copolymer to be used.

As a binder resin containing the above-mentioned graft copolymer, other resins, including polyester resins and wax, may further be used jointly to improve fixation property and the like.

Nonaqueous dispersion medium to be used in the ink composition of the present invention for an ink-jet printer is nonpolar insulating solvents and preferably has dielectric constant of 1.5 to 20 and surface tension of 15 to 60 mN/m (at 25°C). Further desired properties are low toxicity, low flammability and little offensive smell.

As such nonaqueous dispersion medium, solvents selected from straight chain or branched chain aliphatic hydrocarbons, alicyclic hydrocarbons, aromatic hydrocarbons, petroleum naphtha, their halogen substitution products and the like can be listed. For example, any solvent selected from the following group can be used separately or in mixture. The group includes hexane, octane, isooctane, decane, isodecane, decalin, nonane, dodecane, isododecane, Isoper E, Isoper G, Isoper H and Isoper L of Exxon Corp., Sortol of Phillip Petroleum Int'l, Ltd., IP Solvent of Idemitsu Petrochemical Co., Ltd., and as petroleum naphtha, S.B.R. Shellzol 70 and Shellzol 71 of Shell Petrochemical Co. Ltd., and Begazol of Mobil Petroleum Co., Ltd.

As preferable hydrocarbon solvents, high purity isoparaffin hydrocarbons ranging from 150 to 350°C in boiling point can be listed. As commercially available products, the above-mentioned Isoper G, H, L, M, V (trade names) and Noper 12, 13, 15 (trade names) made by Exxon Chemical Corp., IP Solvent 1620, 2028 (trade names) made by Idemitsu Petrochemical Co., Ltd., Isozol 300, 400 (trade names) made by Japan Petrochemical Co., Ltd., Amusco OMS, Amsco 460 solvent (Amusco; trade name of Spirits Corp.) and the like can be listed.

These products are aliphatic saturated hydrocarbons with extremely high purity and are not more than 3 cSt in viscosity at 25°C, 22.5 to 28.0 mN/m in surface tension at 25°C and not less than 10¹⁰ Ω·cm in specific resistance at 25°C. Moreover, they have features of being stable with low reactivity, high safety with low toxicity, and little offensive smell.

As halogenated hydrocarbon solvents, there are fluorocarbon solvents, including perfluoroalkanes represented to be CₙF₂ₙ₊₂, for example, C₇F₁₆, C₈F₁₈ and the like ("Florinat PF5080" and "Florinat PF5070" (trade names) made by Sumitomo 3M Ltd., and like), inactive fluorinated liquids ("Florinat FC series" (trade names) made by Sumitomo 3M Corp., and the like), fluorocarbons ("Crytocks GPL series" (trade names) made by Du Pont Japan Limited Co., Ltd., and the like), flons ("HCFC-141b" (trade name) made by Daikin Kogyo Industries, Ltd., and the like), iodinated fluorocarbons such as [F(CF₂)₄CH₂CH₂I], [F(CF₂)₆I] and the like ("I-1420"and "I-1600" (trade names) made by Daikin Fine Chemical Laboratory, and the like).

As nonaqueous solvents to be used in the present invention, further higher fatty acid ester and silicone oil can also be used. As concrete examples of silicone oil, low viscosity synthetic dimethylpolysiloxane can be listed, and its commercially available products include KF96L (trade name) made by Shinetsu Silicone Co., Lt., and SH200 (trade name) made by Dow Corning Toray Silicone Co., Ltd.

Silicone oil should not be limited to these concrete examples. As for these dimethyl polysiloxane, products with very wide ranges of viscosity can be available depending on their molecular weights, but it is preferable to use those ranging from 1 to 20 cSt. These dimethyl polysiloxanes have volume resistivity of 10¹⁰ Ω·cm or more similarly to isoparaffin hydrocarbons, and has features of high stability, high safety, and odorless property. Furthermore, these dimethyl polysiloxanes are characterized by low surface tension and have surface tension of from 18 to 21 mN/m.

As for solvents that can be used in mixture together with these organic solvents, such solvent can be listed; alcohols (for example, methyl alcohol, ethyl alcohol, propyl alcohol, butyl alcohol, fluorinated alcohols and the like), ketones (for example, acetone, methyl ethyl ketone, cyclohexanone and the like), carboxylates (for example, methyl acetate, ethyl acetate, propyl acetate, butyl acetate, methyl propionate, ethyl propionate and the like), ethers (for example, diethyl ether, dipropyl ether, tetrahydrofuran, dioxane and the like), and halogenated hydrocarbons (for example, methylene dichloride, chloroform, carbon tetrachloride, dichloroethane, methylchloroform and the like) and the like.

In the next place, coloring agents to be used in the present invention will be explained in detail.

Coloring agents are not limited especially, but all of organic pigments and inorganic pigments that are commonly sold on the market can be listed.

For example, as for those assuming a yellow color, following pigments are considered, including C. I. Pigment Yellow 1 (Fast Yellow G and the like), monoazo pigments like C. I. Pigment Yellow 74, C. I. Pigment Yellow 12 (Disazi Yellow AAA and the like), disazo pigments like C. I. Pigment Yellow 17, nonbenzidine azo pigments like C. I. Pigment Yellow 180, azolake pigments like C. I. Pigment Yellow 100 (Tartrazine yellow lake and the like), condensed azo pigments like C. I. Pigment Yellow 95 (Condensed Azo Yellow GR and the like), acid dye lake pigments like C. I. Pigment Yellow 115 (Quinoline yellow lake and the like), basic dye lake pigments like C. I. Pigment Yellow 18 (Thioflavine lake and the like), anthraquinone pigments like Flavantron Yellow (Y-24), isoindolinone pigments like Isoindolinone Yellow 3RLT (Y-110), quinophthalone pigments like Quinophthalone Yellow (Y-138), isoindoline pigments like Isoindoline Yellow (Y-139), nitrosopigments like C. I. Pigment Yellow 153 (Nickel nitroso yellow and the like), and metal complex azomethine pigments like C. I. Pigment Yellow 117 (Copper azomethine yellow and the like).

As for those assuming a magenta color, following pigments are considered, including monoaszo pigments like C. I. Pigment Red 3 (Toluidine red and the like), disazo pigments like C. I. Pigment Red 38 (Pyrazolone Red B and the like), azolake pigments like C. I. Pigment Red 53 : 1 (Lake Red C and the like) and C. I. Pigment Red 57 : 1 (Brilliant Carmine 6B), condensed azo pigments like C. I. Pigment Red 144 (Condensed Azo Red BR and the like), acid dye lake pigments like C. I, Pigment Red 174 (Floxine B Lake and the like), basic dye lake pigments like C. I. Pigment Red 81 (Rhodamine 6G' Lake and the like), anthraquinone pigments like C. I. Pigment Red 177 (Dianthraquinonyl red and the like), thioindigo pigments like C. I. Pigment Red 88 (Thioindigo Bordeaux and the like), perinone pigments like C. I. Pigment Red 194 (Perinone red and the like), perylene pigments like C. I. Pigment Red 149 (Perylene scarlet and the like), quinacridon pigments like C. I. Pigment Red 122 (Quinacridon magenta and the like), isoindolinone pigments like C. I. Pigment Red 180 (Isoindolinone Red 2BLT and the like), and alizarin lake pigments like C. I. Pigment Red 83 (Madder lake and the like).

As for pigments assuming a cyanic color, following pigments are considered, including disazo pigments like C. I. Pigment Blue 25 (Dianicydine blue and the like), phthalocyanine pigments like C. I. Pigment Blue 15 (Phthalocyanine blue and the like), acid dye lake pigments like C. I. Pigment Blue 24 (Peacock blue lake and the like), basic dye lake pigments like C. I. Pigment Blue 1 (Bichlothia Pure Blue BO Lake and the like), anthraquinone pigments like C. I. Pigment Blue 60 (Indanthrone blue and the like), and alkali blue pigments like C. I. Pigment Blue 18 (Alkali Blue V-5 : 1).

As for pigments assuming a black color, following pigments are considered, including organic pigments such as aniline black pigments like BK-1 (Aniline black) and the like, iron oxide pigments, and carbon black pigments like furnace black, lampblack, acetylene black, channel black and the like.

As concrete examples of carbon black pigments, MA-8, MA-10, MA-11, MA-100, MA-220, #25, #40, #260, #2600, #2700B, #3230B, CF-9 and MA-200RB from Mitsubishi Corp., Printex 75 and 90 from Degussa C., Ltd., Monark 800 and 1000 from Cabot Corp., and the like can be listed. Moreover, applying metal powder can also be considered to reproduce the colors of gold, silver, copper and the like.

Coloring agents are preferable to be surface treated according to the method described in the fifth chapter of "Pigment Dispersion Technology" published by Technical Information Association to make their atomization easy and to improve their dispersibility. As for the surface treatment of a coloring agent, rosin treatment, flushing resin treatment and the like can be listed. Predispersed pigments commonly sold on the market can also be used as coloring agents. As for concrete examples of commercially available predispersed pigments, microlith pigments from Chiba Specialty Chemicals K.K. and the like can be listed.

The rate of a coloring agent and a binder resin in the present invention is preferably in the range of 95/5 to 5/95, and more preferably in the range of 80/20 to 10/90 in the weight ratio of the coloring agent/the binder resin. The content of a coloring agent in an ink composition can be properly controlled so that the ink composition containing the binder resin and further other additives of the present invention will be the objective concentration in the finally formed image for the purpose of using the image.

In the next place, the process of making colored admixture by covering a coloring agent with a binder resin composed of a graft copolymer will be explained. The colored admixture will be prepared using, the following method.

A method in which a binder resin is dissolved into a solvent, and a coloring agent is added in the solution, then the mixture is subjected to wet dispersion using a ball mill, an atoritor, a sand grinder or the like, and finally the solvent is evaporated to yield colored admixture. Or instead of the final stage, another process may be used, that is, the dispersion is poured into a nonsolvent for the binder resin to cause the precipitation of the admixture, and drying it leads to colored admixture.

In the next place, the dispersion process of dispersing the above-mentioned colored admixture in a particulate state in a nonaqueous solvent will be explained.

In the dispersion process, the use of a pigment dispersing agent is preferable to disperse the colored admixture in a particulate state and to stabilize the dispersion in the nonaqueous solvent.

As pigment dispersing agents that can be used in the present invention to disperse a coloring agent in a particulate state in a nonaqueous solvent, common pigment dispersing agents that are applied in the nonaqueous dispersion medium can be used. As pigment dispersing agents, any agent that is compatible with said nonaqueous insulating solvent and can stably disperse pigment in particulates may be used. As for concrete examples of pigment dispersing agents, nonionic surface-active agents are listed, including sorbitan fatty acid esters (sorbitan monooleate, sorbitan monolaurate, sorbitan sesquioleate, sorbitan trioleate and the like), polyoxyethylene sorbitan fatty acid esters (polyoxyethylene sorbitan monostearate, polyoxyethylene sorbitan monooleate and the like), polyethylene glycol fatty acid esters (polyoxyethylene monostearate, polyethylene glycol diisostearate and the like), polyoxyethylene alkylphenyl ethers (polyoxyethylene nonylphenyl ether, polyoxyethylene octylphenyl ether and the like) and aliphatic diethanolamides, and as for dispersing agents of polymer series, high-molecular compounds having molecular weight of 1000 or more are suitable, for example, styrene-maleic acid resins, styrene-acrylic resins, rosin, BYK-160, 162, 164 and 182 (urethane high-molecular compounds made by Big Chemie Corp.), EFKA-47 and LP-4050 (dispersing agents of urethane series made by EFKA Corp.), Sorsperse 24000 (polyester high-molecular compounds made by Zeneca Corp.), Sorsperse 17000 (aliphatic diethanolamides made by Zeneca Corp.) and the like can be listed.

As for pigment dispersing agents of polymer series other than those mentioned above, further, random copolymers that are comprised of monomers such as lauryl methacrylate, stearyl methacrylate, 2-ethylhexyl methacrylate, cetyl methacrylate and the like that solvate with dispersing agents, of monomers such as methyl methacrylate, ethyl methacrylate, isopropyl methacrylate, styrene, vinyl toluene and the like that are hard to solvate with dispersing agents and of parts having polar groups, and graft copolymers and the like disclosed in Japanese Patent Application laid-Open No. 3-188469 can be listed. When a graft copolymer is used, the same graft copolymer as that used as a binder resin may be used as a pigment dispersing agent.

As for the above-mentioned monomers containing polar groups, acidic group monomers, including acrylic acid, methacrylic acid, itaconic acid, fumaric acid, maleic acid, styrene sulfonic acid or their alkali salts, and basic group monomers, including dimethylaminoethyl methacrylate, diethylaminoethyl methacrylate, vinylpyridine, vinylpyrrolidine, vinylpiperidine and vinyllactam can be listed. Besides, styrene-butadiene copolymers, block copolymers of styrene and long chain alkyl methacrylates that are disclosed in Japanese Patent Application Laid-Open No. 60-10263, and the like can be listed. As for preferable pigment dispersing agents, graft copolymers and the like that are disclosed in Japanese Patent Application Laid-Open No. 3-188469 can be listed.

The amount of a pigment dispersing agent used is preferably 0.1 to 300 parts by weight based on 100 parts by weight of pigment. Within this range, good pigment dispersion effect can be obtained.

As for methods of using a colored admixture and a pigment dispersing agent, for example, there are the following methods, and effects to be aimed at can be obtained by the use of any of them.
(1) A pigment composition in which a colored admixture and a pigment dispersing agent have been mixed in advance is added in a nonaqueous solvent to be dispersed.
(2) A colored admixture and a pigment dispersing agent are added separately in a nonaqueous solvent to be dispersed.
(3) Two dispersed materials obtained by dispersing a colored admixture and a pigment dispersing agent separately in each nonaqueous solvent in advance are mixed. In this case, a pigment dispersing agent may be dispersed only with a solvent.
(4) After a colored admixture is dispersed in a nonaqueous solvent, a pigment dispersing agent is added in the obtained pigment dispersed material.

As for machines for mixing or dispersing the above-mentioned colored admixture in a nonaqueous solvent, a dissolver, a high-speed mixer, a homo-mixer, a kneader, a ball mill, a roll mill, a sand mill, an atoritor and the like can be used. The range of the average particle diameter of the colored admixture after dispersing in this dispersion process is from 0.01 to 10 µm, and the preferable range is from 0.01 to 1.0 µm.

Oil-based ink of the present invention for an ink-jet printer can be used as oil-based ink in various ink-jet recording methods. As for ink-jet recording methods, for example, the piezo method, electrostatic ink-jet printers and thermal ink-jet printers that are represented by the slit jet of Toshiba Corp. and NTT (Nippon Telegraph and Telephone Corporation), and others can be listed.

### EXAMPLES

Hereinafter, production examples of graft copolymers and examples of the present invention will be illustrated. However, the present invention should not be limited to them.

### Preparation Example 1 of macromonomer: (M-1)

A mixed solution of 110 g of octadecyl methacrylate, 1 g of thioglycolic acid and 200 g of toluene was heated to a temperature of 75°C while being stirred under nitrogen flow. After adding 1.5 g of 2,2'-azobisisobutyronitrile (the abbreviation is A. I. B. N.), the reaction was carried out for 4 hours. Further, 0.5 g of A. I. B. N. was added and reacted for 3 hours, and then, further, 0.3 g of A. I. B. N. was added and reacted for 3 hours. The reaction solution was cooled to room temperature, and 2.8 g of 2-hydroxyethyl methacrylate was added in the solution, and then the mixture of 4.5 g of dicyclohexylcarbodiimide (the abbreviation is D. C. C.) and 10 g of methylene chloride was dropped in 1 hour. After that, 0.1 g of 4-dimethylaminopyridine and 0.1 g of t-butylhydroquinone were added and the solution was stirred for 4 hours as it was.

The filtrate obtained by filtering deposited crystals was reprecipitated in 2 liters of methanol. Precipitated white solids were collected by decantation, and the solids were dissolved in 300 ml of tetrahydrofuran and reprecipitated again in 3 liters of methanol. Precipitated white powder was collected and dried under reduced pressure to yield a macromonomer (M-1) of 12, 000 in weights-average molecular weight in the yield of 93.2 g. The molecular weight is reduced value to polystyrene by GPC method.

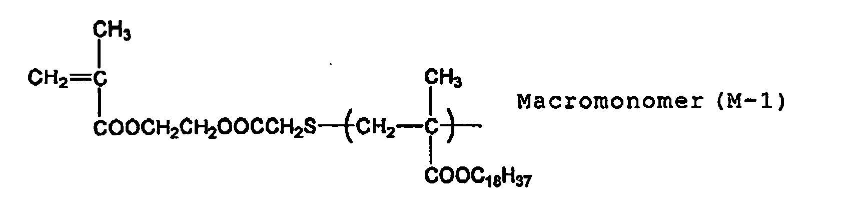

### Preparation Examples 2 to 10 of macromonomer: (M-2) to (M-10)

Macromonomers of (M-2) to (M-10) in the following Table-A were prepared in the same manner as that in Preparation Example 1 of the above-mentioned macromonomer, using methacrylate monomer (corresponding to octadecyl methacrylate), a chain-transfer agent (corresponding to thioglycolic acid), an initiator (corresponding to A. I. B. N.) and unsaturated carboxylate (corresponding to 2-hydroxyethyl methacrylate) each instead of corresponding compounds in Preparation Example 1. The weight-average molecular weight of each obtained macromonomer was from 4,600 to 61,000.

**Table-A**

| Preparation examples of macromonomers | Macromonomers (weight-average molecular weight) | Chemical structures of macromonomers |
|---|---|---|
| 2 | M-2 (Mw = 12,600) | 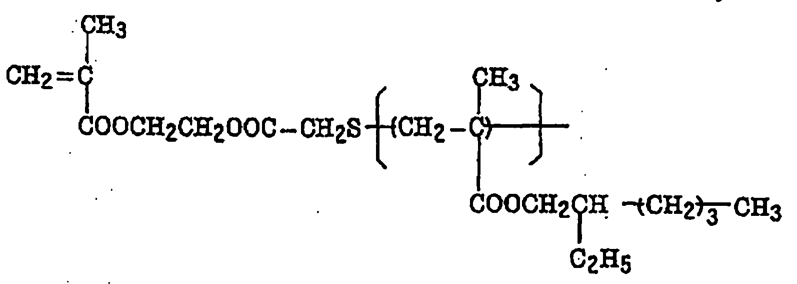 |
| 3 | M-3 (Mw = 11,800) | 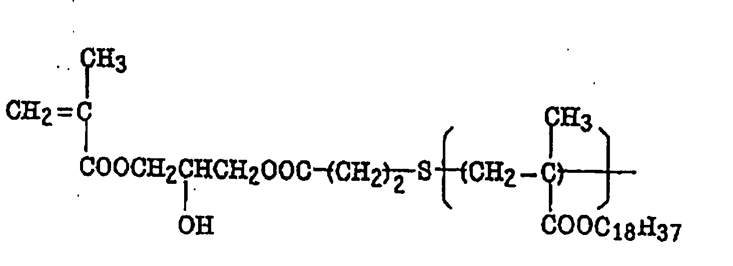 |
| 4 | M-4 (Mw = 16,500) | 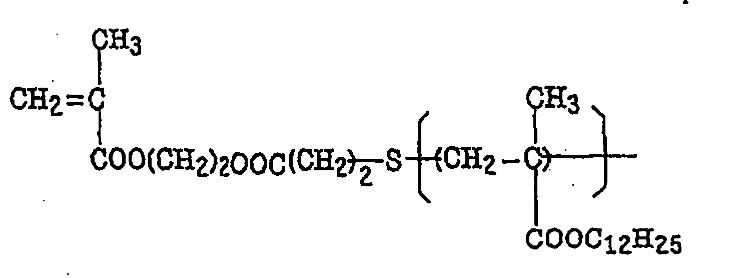 |
| 5 | M-5 (Mw = 4, 600) | 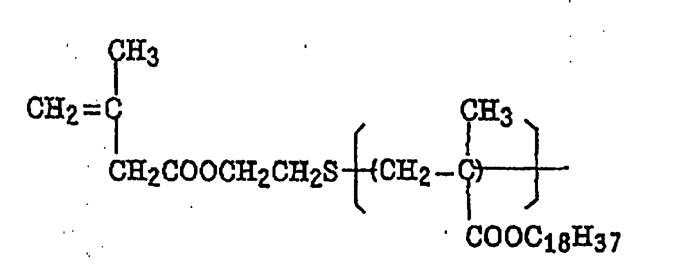 |
| 6 | M-6 (Mw = 9, 800) | 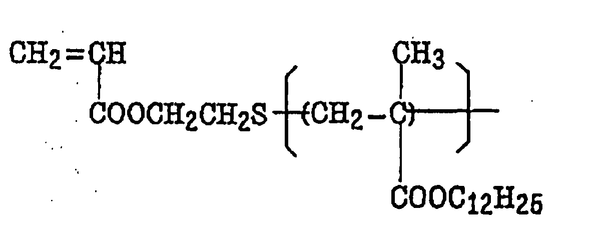 |
| 7 | M-7 (Mw = 13,000) | 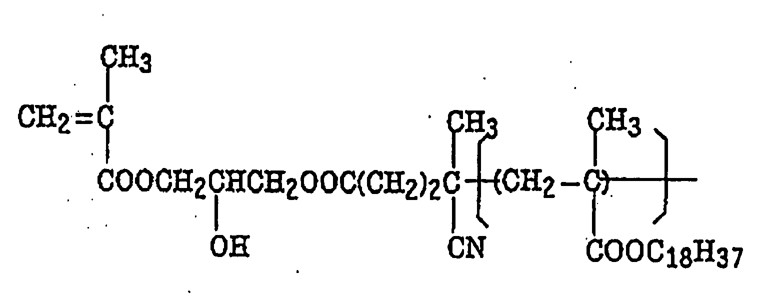 |
| 8 | M-8 (Mw = 14,400) | 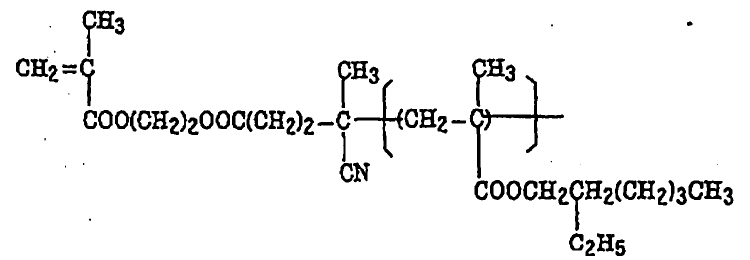 |
| 9 | M-9 (Mw = 28,300) | 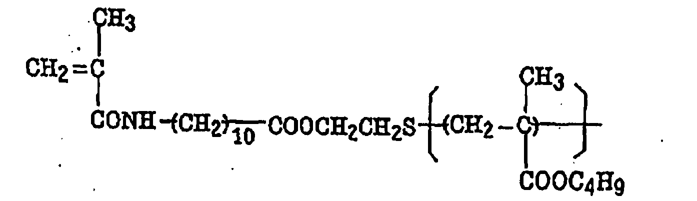 |
| 10 | M-10 (Mw = 61,000) | 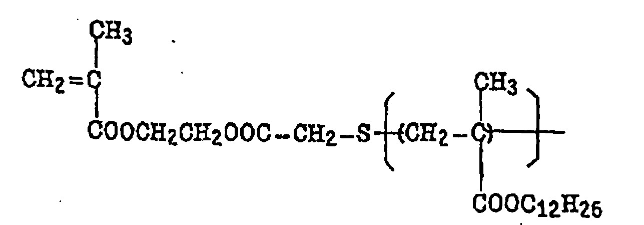 |

### Preparation Example 1 of binder resin: (P-1)

A mixed solution of 50 g of styrene, 50 g of the above-mentioned macromonomer (M-1) and 200 g of toluene was put into a four-neck flask and heated to a temperature of 80°C while being stirred under nitrogen flow. As a polymerization initiator, 1 g of 1,1'-azobis(1-cyclohexanecarbonitrile) was added and the polymerization was carried out for 24 hours at 80°C. After the polymerization, the polymerization mixture was cooled to room temperature, and further 200 g of toluene was added and the resulting mixture was reprecipitated in 4 liters of methanol. After filtering the mixture, obtained white powder was dried to yield 92 g of powder of 4.3 × 10⁴ in weight-average molecular weight.

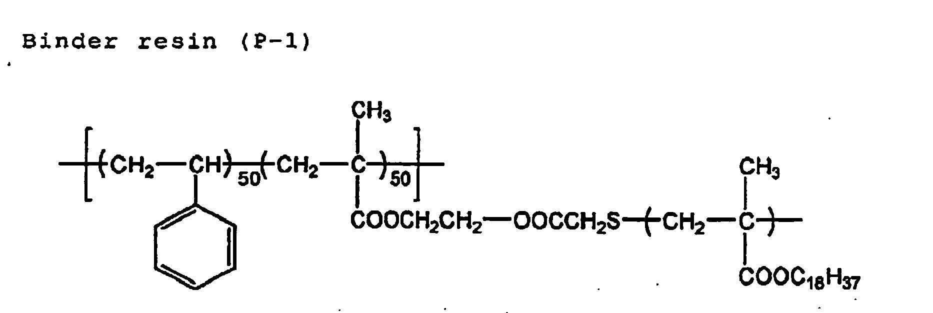

Copolymerization ratio represents weight ratio.

### Preparation Examples 2 to 15 of binder resin: (P-2) to (P-15)

Except for replacing styrene and macromonomer (M-1) used in Preparation Example 1 of binder resin with each compound shown in the following Table-B, reactions were carried out similarly to Preparation Example 1 of the above-mentioned binder resin and each binder resin of (P-2) to (P-15) was prepared. The weight-average molecular weights of graft copolymers, each of which is a binder resin, were in the range of 2.8 × 10⁴ to 10.1 × 10⁴.

**Table-B**

| Preparation example of binder resin | Binder resin | Monomer | Macromonomer | Monomer/ma cromonomer (wt/wt) |
|---|---|---|---|---|
| 2 | P-2 | Styrene | M-2 | 30/70 |
| 3 | P-3 | Styrene | M-2 | 40/60 |
| 4 | P-4 | Styrene | M-8 | 40/60 |
| 5 | P-5 | Styrene | M-8 | 50/50 |
| 6 | P-6 | Styrene | M-8 | 60/40 |
| 7 | P-7 | Styrene | M-9 | 50/50 |
| 8 | P-8 | Styrene | M-9 | 60/40 |
| 9 | P-9 | Styrene | M-7 | 50/50 |
| 10 | P-10 | Styrene | M-11 | 50/50 |
| 11 | P-11 | Styrene | M-13 | 50/50 |
| 12 | P-12 | MMA* | M-9 | 20/80 |
| 13 | P-13 | MMA | M-9 | 30/70 |
| 14 | P-14 | MMA | M-9 | 60/40 |
| 15 | P-15 | MMA | M-8 | 20/80 |

| | | | | |
|---|---|---|---|---|
| * Methyl methacrylate | | | | |

### Preparation Example 1 of comparative binder resin: (R-1)

Similarly to Preparation Example 1 of a binder resin, 90 g of methyl methacrylate, 10 g of stearyl methacrylate and 200 g of toluene were put into a four-neck flask and heated at 75°C for 1 hour while passing nitrogen gas. After that, 2 g of 1,1'-azobis (1-cyclohexanecarbonitrile) was added as a polymerization initiator and the polymerization was carried out at 80°C for 8 hours. A comparative binder resin (R-1) was obtained by reprecipitating it in methanol in the same manner as the above-mentioned Preparation Example 1 of a binder resin. Polymers obtained here were random copolymers and their weight-average molecular weight was 2.7 × 10⁴.

### Preparation example 2 of comparative binder resin: (R-2)

A comparative binder resin (R-2) of a random copolymer was synthesized in the same manner as that in Preparation Example 1 of a comparative binder resin, except for using 30 g of butyl methacrylate and 70 g of methyl methacrylate instead of stearyl methacrylate. The weight-average molecular weight was 3.4 × 10⁴.

### Example 1

### <Preparation of ink composition (IJ-1)>

After 100 parts by weight of Hostaperm Blue B2G (made by Clariant Co., Ltd.) as a pigment and 100 parts by weight of the above-mentioned resin (P-1) as a binder resin were preliminarily ground and well mixed in a trio-blender, the mixture was fused and kneaded (for 20 minutes) with a three roll mill heated at 90°C. The above-mentioned kneaded pigment mixture was ground in a pin mill.

Next, 10 parts by weight of this kneaded pigment mixture, 65 parts by weight of Isoper G and 25 parts by weight of the 20 weight % solution that had been prepared by heating and dissolving the pigment dispersing agent (D-1) with the following structure in Isoper G, were mixed together with 250 weight parts of 3G-X glass beads in a paint shaker (Toyo Seiki K.K.) for 120 minutes. When the volume average particle diameter of pigment resin particles in the dispersion liquid was measured with an ultracentrifugal automatic particle-size distribution measurement device, CAPA700 (made by Horiba, Ltd.), the result was 0.15 µm to show good dispersion.

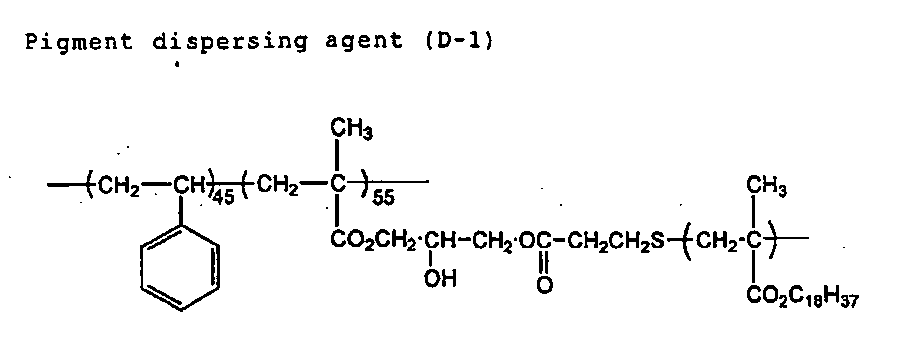

The above-mentioned dispersion liquid of pigment resin particles that glass beads had been removed by filtering them was once concentrated by distilling off the solvent, and then the concentrated liquid was diluted by Isoper G to prepare an ink composition (IJ-1). The concentration of pigment resin particles in the obtained ink composition was 18 wt%, the viscosity was 11 cp (measured at 25°C with an E-type viscometer), and the surface tension was 23 mN/m (measured at 25°C with an automatic surface tension balance made by Kyowa Interface Science Co., Ltd.).

### <Ink-jet recording>

Using a color facsimile, Saiyuki UX-E1CL (made by Sharp Corp.), as an ink-jet recording device that was filled up with the above-mentioned ink composition (IJ-1), painting was carried out on a high-grade exclusive ink-jet paper from Fuji Photo Film Co., Ltd., resulting in the stable ejecting of the ink composition without clogging the nozzles. Painted images obtained had no bleed and was of good quality and clear with the image concentration of 1.5. Next, fully daubed patterns were printed and the printed material was dried. After that, when the daubed parts were rubbed with fingers, it was found that no dirt was visually observed on the field at all and the patterns were extremely excellent in abrasion resistance. The ink composition (IJ-1) showed no precipitation and aggregation even if having been preserved for a long time and was extremely excellent in dispersibility.

### Comparative Examples 1 to 4

Except for using comparative binder resin (R-1), comparative binder resin (R-2) or polyester resin GV-230 (made by Toyobo Co., Ltd.), those are all acrylic random copolymers, instead of the binder resin (P-1) of the present invention in Example 1, the mixture was fused and kneaded quite similarly to Example 1 and kneaded pigment mixtures for Comparative Examples 1 to 3 were obtained as a result.

In Comparative Example 4, Hostacopy C601 (made by Clariant Co., Ltd.), a polyester masterbatch, was used as a kneaded pigment mixture.

Using obtained kneaded pigment mixtures each, comparative ink compositions of (S-1) to (S-4) were prepared in the quite same manner as Example 1. The surface tension of each ink composition was controlled to be 23 mN/m, and the viscosity was controlled to be 10 to 14 cp by changing the concentration of pigment resin particles. Table-C shows the performance evaluation results of comparative ink compositions of (S-1) to (S-4).

**Table-C**

| | Ink composition | Particle diameter of pigment resin particles (µm) | Dispersion stability of ink composition | Ejecting stability (clogging) | Printed image quality | Abrasion resistance of printed image |
|---|---|---|---|---|---|---|
| Example 1 | (IJ-1) | 0.15 | ⊚ | ⊚ (None) | ○ | ⊚ |
| Comparative example 1 | (S-1) | 0.88 | Δ× (Aggregation occurred) | × (Occurred) | × (White stripes appeared) finger | × (Scraped with rubbing) |
| Comparative example 2 | (S-2) | 1.36 | × (Aggregation occurred) | × (Occurred) | × (White stripes appeared) rubbing) | × (Scraped with finger |
| Comparative example 3 | (S-3) | 1.32 | × (Aggregation occurred) | × (Occurred) | × (White stripes appeared) | × (Scraped with finger rubbing) |
| Comparative example 4 | (S-4) | 1.39 | × (Aggregat ion occurred) | × (Occurred) | × (White stripes appeared) | × (Scraped with finger rubbing) |

The results of Table-C show that the ink composition (IJ-1) of the present invention, in which a binder resin comprised of a graft copolymer is used, has pigment resin particles dispersed in particulates, causes no precipitation and aggregation even if being preserved for a long time and is excellent in dispersibility (Example 1).

On the other hand, in the ink compositions of (S-1) to (S-4) of Comparative Examples 1 to 4, rough particles were mixed in pigment resin particles to cause remarkable aggregation even in short term preservation. While the ink composition (IJ-1) of the present invention did not occur clogging and was excellent in ejecting stability, all of comparative ink compositions of (S-1) to (S-4) became unstable in ejecting ink within one hour to induce clogging.

As for painted images with an ink-jet recording device, the images had no ink bleed and were of good quality and clear in case of using the ink composition (IJ-1) of the present invention, but in case of using comparative ink compositions of (S-1) to (S-4), ink ejecting was abnormal from the beginning to induce defects of white stripes on the images showing scrapes in them.

As for the abrasion resistance of painted images, while images painted with the ink composition (IJ-1) of the present invention had no dirt on the field and was extremely excellent in abrasion resistance, all of the images painted with comparative ink compositions of (S-1) to (S-4) were found to be scraped when daubed parts of the images were rubbed with the finger.

As mentioned above, the ink composition that uses a binder resin comprised of a graft copolymer of the present invention can be understood that pigment resin particles in the composition are dispersed in particulates and excellent in dispersion stability, the composition does not clog the nozzles of a ink-jet recording device and excellent in ejecting stability, it does not cause ink bleed and gives excellent and clear painted images, and it is excellent in abrasion resistance of its painted images.

### Example 2

### <Preparation of ink composition (IJ-2)>

After 100 parts by weight of Toner Yellow HG (PY180, made by Clariant Co., Ltd.) as a yellow pigment and 100 parts by weight of the above-mentioned resin (P-12) as a binder resin were preliminarily ground and well mixed in a trio-blender, the mixture was fused and kneaded (for 120 minutes) with a desktop kneader PBV (made by Irie Company) that was heated at 100°C. The above-mentioned kneaded pigment mixture was ground in a pin mill.

Next, after 18 parts by weight of this kneaded pigment mixture, 50 parts by weight of Isoper G and 45 parts by weight of 20 weight % Isoper solution of the pigment dispersing agent (D-1) used in Example 1 were preliminarily dispersed together with 250 parts by weight of MK-3GX glass beads for 30 minutes in a paint shaker (Toyo Seiki K.K.), the dispersed mixture was wet dispersed in KDL-type Daino mill (Shinmaru Enterprise Corp.) at 3000 rpm for 2 hours. The volume average particle diameter of pigment resin particles in the dispersion liquid was 0.13 µm and the particles were well dispersed.

Using this pigment resin particles, an ink composition (IJ-2) was prepared in the same manner as that in Example 1. The surface tension of the ink composition was controlled to be 23 mN/m, and the viscosity was controlled to be 12 cp by changing the concentration of pigment resin particles.

When the painting performance of the ink composition was evaluated in the same manner as that in Example 1, the ink composition was ejected stably for hours without clogging nozzles. Obtained painted images were found to have no bleed, be of good quality and clear with the image concentration of 1.2, and be excellent in abrasion resistance of daubed parts. The ink composition showed no precipitation and aggregation even if having been preserved for a long time and was extremely excellent in dispersibility.

### Examples 3 to 9

### <Preparation of ink compositions of (IJ-3) to (IJ-9)>

Except for using each binder resin described in the following Table-D instead of the binder resin (P-12) in the production of the ink composition (IJ-2) in Example 2, the mixtures were fused and kneaded and were wet dispersed in the quite same manner as that in Example 2 to prepare ink compositions of (IJ-3) to (IJ-9). Temperatures during fusing and kneading the mixtures were controlled to be 80 to 150°C, higher than softening points of binder resins. The surface tension of the ink compositions was controlled to be 23 mN/m, and the viscosity was controlled to be 10 to 14 cp by changing the concentration of pigment resin particles. The measurement results of the volume average particle diameters of pigment resin particles in the dispersion liquids of ink compositions of (IJ-3) to (IJ-9) were collectively shown in Table-D.

**Table-D**

| Ink composition | Binder resin | Volume average particle diameter (µm) | Ink composition | Binder resin | Volume average particle diameter (µm) |
|---|---|---|---|---|---|
| IJ-3 | P-1 | 0.17 | IJ-7 | P-6 | 0.20 |
| IJ-4 | P-9 | 0.15 | IJ-8 | P-14 | 0.26 |
| IJ-5 | P-4 | 0.31 | IJ-9 | P-15 | 0.19 |
| IJ-6 | P-5 | 0.22 | | | |

The painting performance of the ink compositions of (IJ-3) to (IJ-9) was evaluated in the same manner as that in Example 2. All ink compositions were ejected stably for hours without clogging nozzles, and obtained painted images have no bleed and have image concentrations enough to be of good quality and clear. The painted images were found to be excellent in abrasion resistance of daubed parts. The ink compositions of (IJ-3) to (IJ-9) showed no precipitation and aggregation even if having been preserved for a long time and were extremely excellent in dispersibility.

### Examples 10 to 14

### <Preparation of ink compositions of (IJ-10) to (IJ-14)>

Ink compositions of (IJ-10) to (IJ-14) were obtained in the quite same manner as that in Example 1, except for using red pigment, black pigment and yellow pigment that are described in the following Table-E instead of a blue pigment of Hostaperm Blue B2G (made by Clariant Co., Ltd.) in the production of the ink composition (IJ-1) in Example 1. The surface tension and the viscosity of the ink compositions were controlled to be 23 mN/m and 12 cp, respectively. The measurement results of the volume average particle diameters of pigment resin particles in the dispersion liquids of the ink compositions of (IJ-10) to (IJ-14) were shown in Table-E.

**Table-E**

| Inc composition | Color pigment | Volume average particle diameter (µm) |
|---|---|---|
| IJ-10 | Linol blue FG-7350 *1 | 0.12 |
| IJ-11 | Toner magenta E02 *2 | 0.13 |
| IJ-12 | Toner magenta EB *2 | 0.15 |
| IJ-13 | Carbon black MA-8 *3 | 0.15 |
| IJ-14 | Seicafast yellow 2400 *4 | 0.22 |

| | | |
|---|---|---|
| *1 Pigment Blue 15:3 (Toyo Ink Co. Ltd.) *2 Pigment Red 122 (Clariant Co., Ltd.) *3 Pigment Black 7 (Mitsubishi Corp.) *4 Pigment Yellow 17 (Dainichiseika Co., Lid.) | | |

When the painting performance of the ink compositions of (IJ-10) to (IJ-14) was evaluated in the same manner as that in Example 1, all ink compositions were ejected stably for hours without clogging nozzles, and obtained painted images have no bleed and have image concentrations enough to be of good quality and clear. The painted images were found to be excellent also in abrasion resistance of daubed parts. The ink compositions of (IJ-10) to (IJ-14) showed no precipitation and aggregation even if having been preserved for a long time and were extremely excellent in dispersibility. Examples 15 to 18

### <Preparation of ink compositions of (IJ-15) to (IJ-18)>

Wet dispersion was carried out in the quite same manner as that in Example 1, except for using a yellow pigment of Toner Yellow HG (made by Clariant Co., Ltd.) instead of a blue pigment of Hostaperm Blue B2G (made by Clariant Co., Ltd.), further using a commercially available pigment dispersing agent of Sorsperse 17000 (made by Abisia Co., Ltd.) instead of the pigment dispersing agent (D-1), and the amount of Sorsperse 17000 added was controlled to be 5%, 10% and 50% to the pigment in the production of ink composition (IJ-1) in Example 1. The volume average particle diameters of pigment resin particles in the dispersion liquids became smaller to be 0.23 µm, 0.21 µm and 0.14 µm as the amount of Sorsperse 17000 added was increased to 5%, 10% and 50% to the pigment. The ink composition (IJ-15) was obtained by controlling the surface tension and viscosity of the dispersion liquid having the amount of Sorsperse 17000 added of 50%.

Next, ink compositions of (IJ-16) to (IJ-18) were obtained by controlling the surface tension and viscosity in the quite same manner as that in Example 15, except for using the following red pigment and blue pigment at the amount of Sorsperse 17000 added of 50% to the pigment.

The measurement results of the volume average particle diameters of pigment resin particles in the dispersion liquids of the ink compositions of (IJ-16) to (IJ-18) were shown in Table-F.

**Table-F**

| Ink composition | Color pigment | Volume average particle diameter (µm) |
|---|---|---|
| IJ-16 | Hostaperm Blue B2G | 0.12 |
| IJ-17 | Toner magenta E02 | 0.10 |
| IJ-18 | Toner magenta EB | 0.11 |

When the painting performance of the ink compositions of (IJ-15) to (IJ-18) was evaluated in the same manner as that in Example 1, all ink composition were ejected stably for hours without clogging nozzles, and obtained painted images have no bleed and have image concentrations enough to be of good quality and clear. The painted images were found to be excellent in abrasion resistance of daubed parts. The ink compositions of (IJ-15) to (IJ-18) showed no precipitation and aggregation even if having been preserved for a long time and were extremely excellent in dispersibility.

### Examples 19

### <Preparation of ink composition (IJ-19)>

Except for using 100 parts by weight of a yellow pigment of Toner Yellow HG (made by Clariant Co., Ltd.) instead of a blue pigment of Hostaperm Blue B2G (made by Clariant Co., Ltd.) and using 50 parts by weight, 100 parts by weight or 200 parts by weight of the binder resin (P-1) each in the production of the ink composition (IJ-1) in Example 1, the mixtures were fused and kneaded and were wet dispersed in the quite same manner as that in Example 1. Gloss in fused and kneaded materials is higher in those of the high amount of a binder resin added than in those of the low amount, and the volume average particle diameters of pigment resin particles in the dispersion liquids after wet dispersion were 0.26 µm, 0.22 µm and 0.19 µm to 50 parts by weight, 100 parts by weight and 200 parts by weight of the amount of the binder resin (P-1) added, respectively.

An ink composition (IJ-19) was obtained by controlling the surface tension and viscosity of the dispersion liquid of pigment resin particles having 100 parts by weight of the amount of the binder resin (P-1) added. When the painting performance of the ink composition (IJ-19) was evaluated, the ink composition was ejected stably for hours without clogging nozzles, and obtained painted images have no bleed and have image concentrations enough to be of good quality and clear. The painted images were found to be excellent also in abrasion resistance of daubed parts. The ink composition (IJ-19) showed no precipitation and aggregation even if having been preserved for a long time and were extremely excellent in dispersibility.

### Examples 20 to 24

### <Preparation of ink compositions of (IJ-20) to (IJ-24)>

Ink compositions of (IJ-20) to (IJ-24) were obtained by controlling the surface tension and viscosity in the quite same manner as that in Example 1, except for using graft copolymers of binder resins (P-3) and (P-12), and the following pigment dispersing agents (D-2), (D-3) and (D-4), as pigment dispersing agents as shown each in Table-H instead of the pigment dispersing agent (D-1) in Example 1.

### <Preparation of pigment dispersing agents of (D-2) to (D-4)>

Pigment dispersing agent (D-2) was synthesized using a macromonomer of styrene series (the end group is methacryloyl group and the number-average molecular weight is 6000) sold as AS-6 by Toagosei Co., Ltd. A mixed solution of 50 g of a macromonomer of styrene series (AS-6), 50 g of stearyl methacrylate and 200 g of toluene was put into a four-neck flask and heated to a temperature of 80°C while being stirred under nitrogen flow. As a polymerization initiator, 1 g of 1,1'-azobis(1-cyclohexanecarbonitrile) was added and the polymerization was carried out for 24 hours at 80°C. After the polymerization, the polymerization mixture was cooled to room temperature, and further 200 g of toluene was added in the polymerization mixture. Then, the resulting mixture was reprecipitated in 4 liters of methanol. After filtering the mixture, obtained white powder was dried to yield 92 g of powder of a graft copolymer, [P(stearyl methacrylate)-g-P(styrene)], having weight-average molecular weight of 7.9 × 10⁴.

Moreover, each of pigment dispersing agents was prepared by conducting the same reaction as that in the above-mentioned production example of pigment dispersing agent (D-2), except for replacing the monomer and macromonomer with those shown in the following Table-G. Here, AA-S is a macromonomer of methyl methacrylate series (the end group is methacryloyl group and the number-average molecular weight is 6000) sold by Toagosei Co., Ltd.

The weight-average molecular weights of obtained pigment dispersing agents (D-3) and (D-4) were 6.7 × 10⁴ and 5.9 × 10⁴, respectively.

**Table-G**

| Pigment dispersing agent | Monomer | Macromonomer | Monomer/macr omonomer (wt/wt) |
|---|---|---|---|
| D-2 | SMA* | AS-6 | 50/50 |
| D-3 | SMA | AA-6 | 70/30 |
| D-4 | SMA | AA-6 | 90/10 |

| | | | |
|---|---|---|---|
| * stearyl methacrylate | | | |

The measurement results of the volume average particle diameters of pigment resin particles in the dispersion liquids of the ink compositions of (IJ-20) to (IJ-24) were shown in Table-H.

**Table-H**

| Ink composition | Pigment dispersing agent | Volume average particle diameter (µm) |
|---|---|---|
| IJ-20 | D-2 | 0.20 |
| IJ-21 | D-3 | 0.13 |
| IJ-22 | D-4 | 0.16 |
| IJ-23 | P-12 | 0.19 |
| IJ-24 | P-3 | 0.19 |

When the painting performance of the ink compositions of (IJ-20) to (IJ-24) was evaluated, all ink compositions were ejected stably for hours without clogging nozzles, and obtained painted images have no bleed and have image concentrations enough to be of good quality and clear. The painted images were found to be excellent also in abrasion resistance of daubed parts. The ink compositions of (IJ-20) to (IJ-24) showed no precipitation and aggregation even if having been preserved for a long time and were extremely excellent in dispersibility.

As mentioned above, it has been explained using the piezo method as an example that the ink compositions of the present invention are useful as oil-based ink for an ink-jet printer. However, without limiting to the method, the ink compositions will be also applied to electrostatic ink-jet printers and thermal ink-jet printers that are represented by the slit jet of Toshiba Corp. and NTT and the like.

Using a graft copolymer as a binder resin like the present invention can provide oil-based ink for an ink-jet printer that a coloring agent is uniformly dispersed in particulates and a coloring agent dispersion liquid is excellent in dispersion stability. Further, oil-based ink for an ink-jet printer that has such high stability as not to cause clogging at nozzle parts can be provided. Furthermore, oil-based ink for an ink-jet printer that is excellent in drying property on recording paper, excellent in water resistance and light resistance of recorded images and has high abrasion resistance can be provided. Moreover, oil-based ink for an ink-jet printer that is possible to print a large number of printed matters with colored images that have no ink bleed and are of good quality and clear can be provided.

## Claims

1. An ink-jet recording method comprising ejecting an oil-based ink-jet ink composition from an ink-jet recording device onto a medium to form letters and/or images on the medium, the oil-based ink-jet ink composition comprising:
a nonaqueous dispersion medium;
a coloring agent; and
a binder resin comprising a graft copolymer,
wherein the graft copolymer comprises a monomer constituting a principal chain part insoluble in the nonaqueous dispersion medium and a macromonomer constituting a graft part soluble in the nonaqueous dispersion medium, and
wherein the coloring agent and the binder resin are dispersed in particulate form due to wet dispersion.

2. The ink-jet recording method according to claim 1, wherein the monomer is a monomer represented by the following formula (III), and the macromonomer is a macromonomer having a weight-average molecular weight of from 1 × 10³ to 4 × 10⁴, having a chain of a polymer comprising a repeating unit represented by the following formula (II), and having a polymerizable double bond group represented by the following formula (I) at one end of the chain, with the proviso that the polymer is soluble in the nonaqueous dispersion medium: 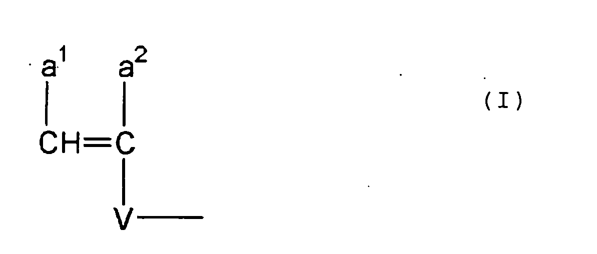 wherein V represents -COO-, -OCO-, -(CH₂)ₙ-OCO-, -(CH₂)ₙ-COO-, -O-, -CONHCOO-, -CONHCO-, -SO₂-, -CO-, -CON(Z¹)-, -SO₂N(Z¹)-, or a phenylene group which may be 1,2-, 1,3-, and 1,4-phenylene group, Z¹ represents a hydrogen atom or a hydrocarbon group, and n represents an integer of from 1 to 3; and a¹ and a², which may be the same as or different from each other, each independently represents a hydrogen atom, a halogen atom, a cyano group, a hydrocarbon group, -COO-Z²-, or -COO-Z² having a hydrocarbon group incorporated therein, and Z² represents a hydrogen atom or a hydrocarbon group; 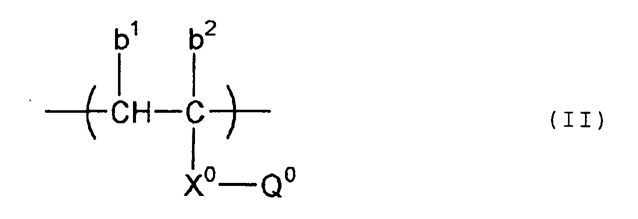 wherein X⁰ represents at least one connecting group selected from -COO-, -OCO-, -(CH₂)ₘ-OCO-, -(CH₂)ₘ-COO-, -O-, -CONHCOO-, -CONHCO-, -SO₂-, -CO-, -CON(Z³)-, and -SO₂N(Z³)-, wherein Z³ represents a hydrogen atom or a hydrocarbon group, and m represents an integer of from 1 to 3; b¹ and b², which may be the same as or different from each other, each independently represents a hydrogen atom, a halogen atom, a cyano group, a hydrocarbon group, -COO-Z²-, or -COO-Z² having a hydrocarbon group incorporated therein, and Z² represents a hydrogen atom or a hydrocarbon group; Q⁰ represents an aliphatic group having 4 to 22 carbon atoms; 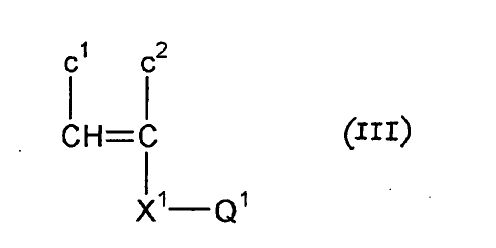 wherein, X¹ represents -COO-, -OCO-, -(CH₂)ₙ-OCO-, -(CH₂)ₙ-COO-, -O-, -CONHCOO-, -CONHCO-, -SO₂-, -CO-, -CON(Z¹)-, -SO₂N(Z¹)-, or a phenylene group which may be 1,2-, 1,3-, and 1,4-phenylene group, Z¹ represents a hydrogen atom or a hydrocarbon group, and n represents an integer of from 1 to 3; Q¹ represents a hydrogen atom, an aliphatic group having 1 to 22 carbon atoms, or an aromatic group having 6 to 12 carbon atoms; and c¹ and c², which may be the same as or different from each other, each independently represents a hydrogen atom, a halogen atom, a cyano group, a hydrocarbon group, -COO-Z²-, or -COO-Z² having a hydrocarbon group incorporated therein, and Z² represents a hydrogen atom or a hydrocarbon group.

3. The ink-jet recording method according to claim 1, wherein the oil-based ink composition further comprises a pigment dispersing agent.

## Patentansprüche

1. Tintenstrah1-Aufzeichnungsverfahren umfassend Ausstoßen einer ölbasierten Tintenstrahl-Tintenzusammensetzung aus einem Tintenstrahl-Aufzeichnungsgerät auf ein Medium, um Buchstaben und/oder Bilder auf dem Medium zu erzeugen, wobei die ölbasierte Tintenstrahl-Tintenzusammensetzung umfaßt:
ein nicht-wäßriges Dispersionsmedium,
ein färbendes Mittel und
ein Bindemittelharz umfassend ein Pfropfcopolymer,
wobei das Pfropfcopolymer ein Monomer, das einen Hauptkettenteil bildet, der in dem nicht-wäßrigen Dispersionsmedium unlöslich ist, und ein Makromonomer umfaßt, das einen Pfropfteil bildet, der in dem nicht-wäßrigen Dispersionsmedium löslich ist, und
wobei das färbende Mittel und das Bindemittelharz in Teilchenform aufgrund von Naßdispersion dispergiert sind.

2. Tintenstrahl-Aufzeichnungsverfahren gemäß Anspruch 1,
wobei das Monomer ein durch die folgende Formel (III) dargestelltes Monomer ist und das Makromonomer ein Makromonomer mit einem gewichtsmittleren Molekulargewicht von 1 x 10³ bis 4 x 10⁴ ist, das eine Polymerkette aufweist, die eine durch die folgende Formel (II) dargestellte sich wiederholende Einheit umfaßt und eine die folgende Formel (I) dargestellte polymerisierbare Doppelbindungsgruppe an einem Ende der Kette aufweist,
mit der Maßgabe, daß das Polymer in dem nicht-wäßrigen Dispersionsmedium löslich ist: 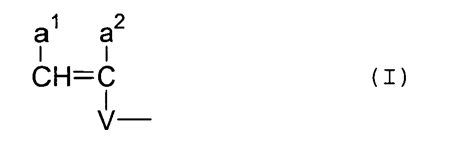 wobei V -COO-, -OCO-, -(CH₂)ₙ-OCO-, -(CH₂)ₙ-COO-, -O-, -CONHCOO-, -CONHCO-, -SO₂-, -CO-, -CON(Z¹)-, -SO₂N(Z¹)-oder eine Phenylengruppe, die eine 1,2-, 1,3- und 1,4-Phenylengruppe sein kann, darstellt, Z¹ ein Wasserstoffatom oder eine Kohlenwasserstoffgruppe darstellt und n eine ganze Zahl von 1 bis 3 darstellt; und a¹ und a², die miteinander gleich oder voneinander verschieden sein können, jeweils unabhängig voneinander ein Wasserstoffatom, ein Halogenatom, eine Cyanogruppe, eine Kohlenwasserstoffgruppe, -COO-Z²- oder -COO-Z² mit einer darin eingegliederten Kohlenwasserstoffgruppe darstellen, und Z² ein Wasserstoffatom oder eine Kohlenwasserstoffgruppe darstellt; 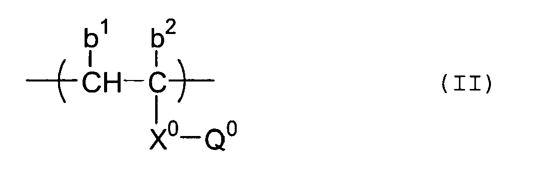 wobei X⁰ wenigstens eine Verbindungsgruppe darstellt, die ausgewählt ist aus -COO-, -OCO-, -(CH₂)ₘ-OCO-, -(CH₂)ₘ-COO-, -O-, -CONHCOO-, -CONHCO-, -SO₂-, -CO-, -CON(Z³) und -SO₂N(Z³)-, wobei Z³ ein Wasserstoffatom oder eine Kohlenwasserstoffgruppe darstellt und m eine ganze Zahl von 1 bis 3 darstellt; b¹ und b², die miteinander gleich oder voneinander verschieden sein können, jeweils unabhängig voneinander ein Wasserstoffatom, ein Halogenatom, eine Cyanogruppe, eine Kohlenwasserstoffgruppe, -COO-Z²- oder -COO-Z² mit einer darin eingegliederten Kohlenwasserstoffgruppe darstellen und Z² ein Wasserstoffatom oder eine Kohlenwasserstoffgruppe darstellt; Q⁰ eine aliphatische Gruppe mit 4 bis 22 Kohlenstoffatomen darstellt; 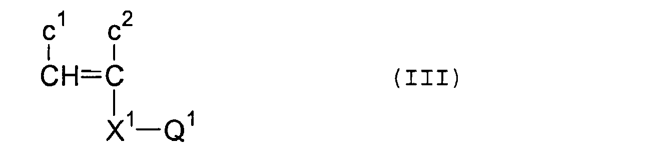 wobei X¹ -COO-, -OCO-, -(CH₂)ₙ-OCO-, -(CH₂)ₙ-COO-, -O-, -CONHCOO-, -CONHCO-, -SO₂-, -CO-, -CON(Z¹)-, -SO₂N(Z¹)-oder eine Phenylengruppe, die 1,2-, 1,3- und 1,4-Phenylengruppe sein kann, darstellt, Z¹ ein Wasserstoffatom oder eine Kohlenwasserstoffgruppe darstellt und n eine ganze Zahl von 1 bis 3 darstellt; Q¹ ein Wasserstoffatom, eine aliphatische Gruppe mit 1 bis 22 Kohlenstoffatomen oder eine aromatische Gruppe mit 6 bis 12 Kohlenstoffatomen darstellt, und c¹ und c², die miteinander gleich oder voneinander verschieden sein können, jeweils unabhängig voneinander ein Wasserstoffatom, ein Halogenatom, eine Cyanogruppe, eine Kohlenwasserstoffgruppe, -COO-Z²- oder -COO-Z² mit einer darin eingegliederten Kohlenwasserstoffgruppe darstellen und Z² ein Wasserstoffatom oder eine Kohlenwasserstoffgruppe darstellt.

3. Tintenstrahl-Aufzeichnungsverfahren gemäß Anspruch 1, wobei die ölbasierte Tintenzusammensetzung ferner ein Pigment-dispergierendes Mittel umfaßt.

## Revendications

1. Procédé d'enregistrement par jet d'encre comprenant l'éjection d'une composition d'encre pour jet d'encre à base d'huile d'un dispositif d'enregistrement à jet d'encre sur un support pour former des lettres et/ou des images sur le support, la composition d'encre pour jet d'encre à base d'huile comprenant :
un milieu de dispersion non aqueux ;
un colorant ; et
un liant résine comprenant un copolymère greffé,
dans lequel le copolymère greffé comprend un monomère constituant une partie de la chaîne principale insoluble dans le milieu de dispersion non aqueux et un macromonomère constituant une partie greffée soluble dans le milieu de dispersion non aqueux, et
dans lequel le colorant et le liant résine sont dispersés sous forme particulaire en raison d'une dispersion humide.

2. Procédé d'enregistrement par jet d'encre selon la revendication 1, dans lequel le monomère est un monomère représenté par la formule suivante (III) et le macromonomère est un macromonomère ayant un poids moléculaire moyen en poids de 1 x 10³ à 4 x 10⁴, ayant une chaîne d'un polymère comprenant un motif répété de chaîne moléculaire représenté par la formule suivante (II) et ayant un groupe à double liaison polymérisable représenté par la formule suivante (I) à une extrémité de la chaîne, avec la clause restrictive consistant en ce que le polymère est soluble dans le milieu de dispersion non aqueux : 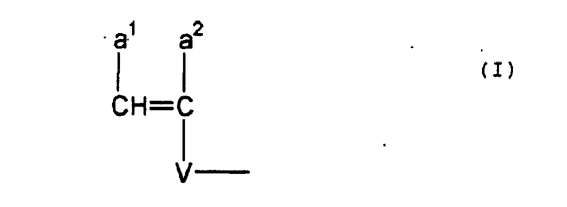 dans laquelle V représente -COO-, -OCO-, -(CH₂)ₙ-OCO-, - (CH₂)ₙ-COO-, -O-, -CONHCOO-, -CONHCO-, -SO₂-, -CO-, - CON(Z¹)-, -SO₂N(Z¹)-, ou un groupe phénylène qui peut être un groupe 1,2-, 1,3- et 1,4-phénylène, Z¹ représente un atome d'hydrogène ou un groupe hydrocarbure et n représente un entier de 1 à 3 ; et a¹ et a², qui peuvent être identiques ou différents l'un l'autre, représentent chacun de manière indépendante un atome d'hydrogène, un atome d'halogène, un groupe cyano, un groupe hydrocarbure, -COO-Z²-, ou -COO-Z² ayant un groupe hydrocarbure incorporé en son sein et Z² représente un atome d'hydrogène ou un groupe hydrocarbure ; 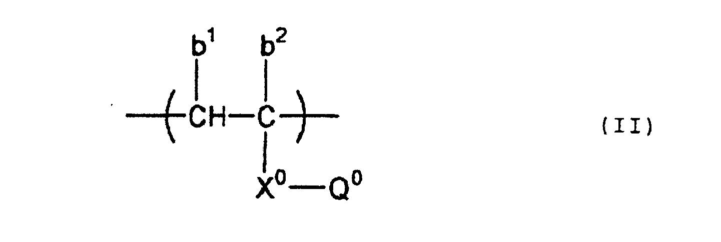 dans laquelle X⁰ représente au moins un groupe de liaison choisi parmi -COO- ,-OCO-, -(CH₂)ₘ-OCO-, -(CH2)m-COO- ,-O-, -CONHCOO-, -CONHCO-, -SO₂-, -CO-, -CON(Z³)- et -SO₂N(Z³)-, dans laquelle Z³ représente un atome d'hydrogène ou un groupe hydrocarbure et m représente un entier de 1 à 3 ; b¹ et b², qui peuvent être identiques ou différents l'un l'autre, représentent chacun de manière indépendante un atome d'hydrogène, un atome d'halogène, un groupe cyano, un groupe hydrocarbure, -COO-Z²-, ou -COO-Z² ayant un groupe hydrocarbure incorporé en son sein et Z² représente un atome d'hydrogène ou un groupe hydrocarbure ; Q⁰ représente un groupe aliphatique ayant 4 à 22 atomes de carbone ; 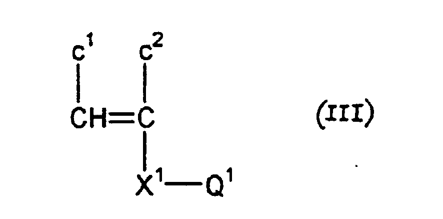 dans laquelle, X¹ représente -COO-, -OCO-, -(CH₂)ₙ-OCO-, -(CH₂)ₙ-COO-, -O-, -CONHCOO-, -CONHCO-, -SO₂-, -CO-, -CON(Z¹)-, -SO₂N(Z¹)-, ou un groupe phénylène qui peut être un groupe 1,2-, 1,3- et 1,4-phénylène, Z¹ représente un atome d'hydrogène ou un groupe hydrocarbure et n représente un entier de 1 à 3 ; Q¹ représente un atome d'hydrogène, un groupe aliphatique ayant 1 à 22 atomes de carbone, ou un groupe aromatique ayant 6 à 12 atomes de carbone ; et c¹ et c², qui peuvent être identiques ou différents l'un l'autre, représentent chacun de manière indépendante un atome d'hydrogène, un atome d'halogène, un groupe cyano, un groupe hydrocarbure, -COO-Z²-, ou -COO-Z² ayant un groupe hydrocarbure incorporé en son sein et Z² représente un atome d'hydrogène ou un groupe hydrocarbure.

3. Procédé d'enregistrement par jet d'encre selon la revendication 1, dans lequel la composition d'encre à base d'huile comprend de plus un agent de dispersion du pigment.
